# EUROPEAN PATENT SPECIFICATION

(11) **EP 3 259 678 B1**
(45) Date of publication and mention of the grant of the patent: **31.03.2021**
(21) Application number: 16752019.6
(22) Date of filing: 18.02.2016
(51) Int. Cl.: H04W 12/06, H04W 12/00, H04L 29/06, G06F 21/71, G06F 21/62, G06F 21/60, G06F 21/44, G06F 21/32, G06F 21/31, G06F 15/16, G06Q 10/10

(54) **DEVICE AND SYSTEMS TO SECURELY REMOTELY ACCESS, MANAGE AND STORE AN ENTERPRISE'S DATA, USING EMPLOYEES' MOBILE DEVICES**
VORRICHTUNG UND SYSTEME FÜR SICHEREN FERNGESTEUERTEN ZUGRIFF, VERWALTUNG UND SPEICHERUNG VON UNTERNEHMENSDATEN ANHAND MOBILER VORRICHTUNGEN VON MITARBEITERN
DISPOSITIF ET SYSTÈMES PERMETTANT D'ACCÉDER À DISTANCE À DES DONNÉES D'ENTREPRISE, EN TOUTE SÉCURITÉ, AINSI QUE DE GÉRER ET STOCKER DE TELLES DONNÉES, À L'AIDE DE DISPOSITIFS MOBILES D'EMPLOYÉS

(30) Priority: 18.02.2015 US 201562117463 P
(43) Date of publication of application: 27.12.2017
(73) Proprietor: OS - New Horizon Personal Computing Solutions Ltd., 7152025 Lod (IL); Sinai, Henry Maurice, 4321702 Raanana (IL)
(72) Inventor: FISH, Gila, 90805 Mevasseret Zion (IL); KORMAN, Avner, 46362 Herzlia (IL); OFEK, David Mor, Nes Harim (IL); GERDOV, Alex, Bene Aysh (IL); MISHUSTIN, Yevgeni, 99500 Bet Shemesh (IL)
(74) Representative: Gassner, Birgitta
(86) International application number: PCT/IB2016/050874
(87) International publication number: WO 2016/132315

(56) References cited:
- US-A1- 2006 085 477
- US-A1- 2011 224 509
- US-A1- 2011 224 509
- US-A1- 2013 336 546
- US-A1- 2014 043 138
- US-A1- 2014 047 231
- US-A1- 2014 087 712
- US-A1- 2014 173 692

## Description

### FIELD OF THE INVENTION

The present invention relates to BYOD (Bring Your Own Device) dedicated hybrid employee-employer managed mobile electronic devices and systems, serving the private users who are employed by an enterprise, with an advanced new approach dedicated for creating isolated secured data exchange and communication capabilities between the user/employee through his security enhanced mobile device and his employer enterprise IT resources, The invention relates also to enabling the execution of a mandatory personal and a highly secured preliminary legitimate user's authentication stage. The invention relates in particular to the need of integration to conventional mobile communication devices with add-on based computerized authentication and secured data management and storage devices, and their operational method.

The field of the invention also relates to new ways of supporting the user's authentication, while blocking the access of any non-legitimate user to the user's employer secured data resources depository residing on the user's mobile device. The Invention relates also to the needs of supporting the user's and the employer's needs for a secured and reliable mutual data exchange capability and for consistently securely updating and managing a user's privately owned device with the enterprise relevant parts of the employee tasks related data depository. The sensitive enterprise related data may be residing on the mobile device, or within the remote enterprise IT management and storage resources, or both. In addition the invention also deals to highly secured supporting data management servers and a related secured communication system, supporting these needs for secure and safe communication through the open cellular and internet communication, enabling a secure data exchange and management, through a dedicated secured communication ecosystem that is geared for serving the BYOD data employee and employer daily work related under a safe and secured data exchange management and maintenance supporting system.

### BACKGROUND OF THE INVENTION

Bring your own device (BYOD), also called bring your own technology (BYOT), or bring your own phone (BYOP), and bring your own PC (BYOPC) - all refer to the policy of permitting employees to bring personally owned mobile devices (modern Smartphones, laptops and tablets) to their workplace, and to use those devices to access privileged employer company (Enterprise) information and applications. The phenomenon is commonly referred to as IT consumerization. The term is also used to describe the same practice applied to students using personally owned devices in education settings. BYOD is making especially in the years after 2010 a very significant acceptance in the business and enterprise IT management world, with about 75% of employees implementation in high growth markets such as Brazil and Russia and 44% in developed markets already using their own technology at work. Surveys have indicated that businesses are unable to stop employees from bringing their personal mobile devices into the workplace. Research is divided on its related benefits, with some reports indicating productivity gains by employees. Companies like "Workspot" believe that BYOD may help employees be more productive. Others say it increases employee morale and convenience by using their own devices and makes the company look like a flexible and attractive employer. Many feel that BYOD can even be the preferred means to attract new hires, pointing to a survey that indicates 44% of job seekers view an organization more positively if it supports their device. With around 95% of employees stating they use at least one personal device for work, BYOD has in the recent year developed to the state that company IT and security managers simply cannot ignore.

The term BYOD first entered common use in 2009, courtesy of Intel when it recognized an increasing tendency among its employees to bring their own devices (i.e., Smartphones, tablets and laptop computers) to work and connect them to the corporate network. However, it took until early 2011 before the term achieved any real prominence when IT services provider Unisys and software vendor Citrix Systems started to share their perceptions of this emergent trend. BYOD has been characterized as a feature of the "consumer enterprise" in which enterprises blend with consumers. This is a role reversal in that businesses used to be the driving force behind consumer technology innovations and trends. In 2012, the U.S.A Equal Employment Opportunity Commission adopted a BYOD policy, but many employees continued to use their government-issued Blackberries because of concerns about billing and the lack of alternative comparatively secured devices. In August 2014, a California court ruled that companies must reimburse any work calls done on any employee's personal phone in the state (Labor Code section 2802).

The proliferation of devices such as Smartphones and tablets, which are now being most commonly used by many people in their daily lives, has led to a number of companies, such as IBM, to allow employees to bring their own devices to work, due to perceived productivity gains and cost savings. The idea was initially rejected by IT managers due to security concerns but more and more companies are now looking to incorporate BYOD policies, with over 90% of respondents to a BYOD survey saying in 2014 that they either already supported BYOD or were at least considering supporting it.

Although the ability to allow staff to work at anytime from anywhere and on any device provides real business benefits; it also brings significant risks. To ensure information does not end up in the wrong hands, it is imperative for companies that want to implement the BYOD policy with their employees to integrate security measures into the BYOD related solutions. Various risks arise from BYOD, and agencies such as the UK Fraud Advisory Panel encouraged organizations to consider and solve these issues before and adopting a BYOD policy.

BYOD security relates strongly to the end node problem, wherein a privately owned mobile device is used to get access to both sensitive and risky networks/service risk-averse employers' organizations. BYOD can easily result in enterprises' data security breaches. For example, if an employee uses a smartphone to access the company network and then loses that phone, untrusted parties could retrieve any unsecured data on the phone. Another type of security breach occurs when an employee leaves the company, they do not have to give back the personal privately owned device, so company applications and other data may still be present on their device. Furthermore people sometimes sell their devices and might forget to wipe sensitive information before selling the device or handing it down to a family member, such as a child for instance. Various members of the family often share certain devices such as tablets; a child may play games on his/her parent's tablet and accidentally share sensitive content via email or through other popular data storage and sharing means such as Dropbox.

From the privacy of the private mobile owner point of use, IT management and enterprise security departments of the employer that wish to monitor usage of personal devices must ensure that they only monitor work related activities or activities that accesses company data or information, without breaching the employee/worker own data privacy. Organizations who wish to adopt a BYOD policy must also consider how they will ensure that the devices which connect to the organization's network infrastructure, to access sensitive information, will be protected from Malware.

Traditionally when the device was owned by the organization, the organization would be able to dictate for what purposes the device may be used, or what public sites may be accessed from the device. Under a BYOD policy an organization can typically expect users to use their own devices to connect to the Internet from various private or public locations. The BYOD users could be susceptible from attacks originating from un-tethered browsing, or could potentially access less secure or compromised sites that may contain harmful material that might compromise the security of the device and later affect and damage the enterprise resources.

Software developers and device manufacturers constantly release security patches due to daily increase in the number of threats from malware. IT departments that support organizations with a BYOD policy must be therefore prepared to have the necessary security management solutions, systems and processes in place that will apply the patches to protect systems against the known vulnerabilities to the various devices that users may choose to use. Ideally such departments should have agile systems that can quickly adopt the support necessary for new devices. Supporting a broad range of devices obviously carries a large administrative overhead. Organizations without a BYOD policy have the benefit of selecting a small number of devices to support, while organizations with a BYOD policy could also limit the number of supported devices, but this could defeat the objective of allowing users the complete freedom to completely choose their device of preference. Several market and policies have emerged to address BYOD security concerns, including mobile device management (MDM), containerization and app virtualization.

While MDM provides organizations with the ability to control applications and content on the employee private mobile device, research has revealed controversy related to employee privacy and usability issues that lead to resistance in some organizations. Corporate liability issues have also emerged when businesses wipe devices after employees leave the organization.

A key issue of BYOD which is often overlooked is BYOD's phone number problem, which raises the question of the ownership of the phone number. The issue becomes apparent when employees in sales or other customer-facing roles leave the company and take their phone number with them. Customers calling the number will then potentially be calling competitors which can lead to loss of business for BYOD enterprises.

Recent International research reveals that only 20% of employees have agreed and signed a BYOD policy. It is more difficult for the firm to manage and control the consumer technologies and make sure they serve the needs of the business. Firms need an efficient inventory management system that keeps track of which devices employees are using, where the device is located, whether it is being used, and what software it is equipped with. If sensitive, classified, or criminal data lands on a U.S. government employee's device, the device is subject to confiscation. A challenging but important task for companies who utilize BYOD is to develop a policy that defines exactly what sensitive company information needs to be protected and which employees should have access to this information, and then to educate all employees on this policy.

Another important issue with BYOD is of scalability and capability. Many organizations today lack proper network infrastructure to handle the large traffic which will be generated when employees will start using different devices at the same time. Nowadays, employees use mobile devices as their primary devices and they demand performance which they are accustomed to. Earlier Smartphones did not use a lot of data and it was easy for Wireless LAN to handle that amount of data, but today Smartphones can access web pages as quickly as most PCs do and have applications that use radio and voice at high bandwidths, hence increasing demand from WLAN infrastructure.

In today's mobile world, employees are tech savvy and want more of a say about the tools that they use to get their work done, and rightfully so. Employees who use their preferred devices under a BYOD related IT system configuration have seen not only an increase in job satisfaction, but also an increase in overall productivity. Most organizations tend to implement and choose a BYOD strategy, but fall victim to the many pitfalls associated with it.

Some industries are adopting BYOD quicker than others. A recent study I by Cisco partners of BYOD practices, stated that the education industry has the highest percentage of people using BYOD for work at 95.25%. A study by IBM says that 82% of employees think that Smartphones play a critical role in business. The study also shows benefits of BYOD include increased productivity, employee satisfaction, and cost savings for the company. Increased productivity comes from a user being more comfortable with their personal device; being an expert user makes navigating the device easier, increasing productivity. Additionally, personal devices are often more cutting edge as company technology refreshes don't happen as often. Employee satisfaction, or job satisfaction, occurs with BYOD by allowing the user to use the device they have selected as their own rather than one selected by the employer IT team. It also allows them to carry one device as opposed to one for work and one for personal. Cost savings can occur on the company end because they now would not be responsible for furnishing the employee with a device. A company can also see improved productivity from an employee with BYOD since the device may easily be moved between home and work.

Portable wireless communication equipment, including smart mobile telephones, (Smartphones) portable data assistants (PDAs), Notepads, Notebooks and other mobile electronic devices have been widely expanding in their popular use and are available and their technical and operational capabilities are fast expanding in the recent years. They are frequently used for implementing various daily needs through dedicated applications by the computer age users. Never the less It has also been recognized that the high portability, strong computing power and the fast expanding daily frequent use of modern portable wireless communication equipment, is not any more just serving as a conventional phone or data communication device, but their use is expanding for using as modern communication devices as well as computerized mobile workstations.

These computerized features are now serving most of modern user's life and under the BYOD also work related management needs. More specifically, because such devices are carried by most modern users through most of daily and night time activities hours, they are most suitable to be used as the user's safe and secured personal data depository including the user's personal and sensitive medical data depository. Further, a loss or theft of such devices creates a risk of unauthorized access and possible mal use of the device's internal user's personal data depository, the loss of a costly smartphone personal device containing a large variety of personal information important to its user, may lead to unauthorized access and mal-use by a hostile intruder to sensitive user's data stored on the device.

To reduce the risks of unauthorized use of the device's communication services and/or unauthorized access to stored data, most portable communication devices include a password or a PIN number protection system. A typical password protection system is implemented by disabling the keypad, or the telephone circuits, and/or the specific installed data application, unless and until the user enters an applicable unlock code. Generally the password/unlock code is in the form of alpha numeric text which may be entered using the keypad of the mobile electronic device.

There exist several challenges with such alphanumeric password/unlock code protection systems. First, the protection provided by a password only exists so long as the password is not compromised. Many people tend to use passwords that are easily guessed, or write their passwords on paper, and otherwise compromise the integrity of their passwords. Second, user entry of a password (and the associated key strokes needed to reach the password entry prompt and active the electronic device after password entry) can be hard to recall and also time consuming and aggravating - to the point where many people select the option of disabling the password protection of the mobile electronic device and their content.

An alternative system used to password protect a mobile telephone is disclosed in US patent 6,351,634 to Shin. The system of Shin is useful for a mobile telephone that includes a touch screen. A registered secret symbol is used as the password. The secret symbol comprises a stroke number value responsive to the existence of pressure applied to the touch screen and X/Y coordinate values for each stroke. In operation, a user inputs a symbol using the pressure sensitive touch screen to draw the various strokes of the secret symbol. The device determines whether the input symbol matches the registered secret symbol and unlocks the telephone if the character stroke number value and the X/Y coordinate value signals match that of the secret password symbol. Shin teaches that the secret password symbol can be a character, a signature, a numeral, or a combination thereof. A significant challenge of the system of Shin is that so long as someone can duplicate the secret password symbol, whether by tracing the user's code insertion acts or by careful drawing possible variations on the touch screen, such person has access to the mobile telephone. Stated another way, authentication of the user is based on the user being able to duplicate the strokes and shape of the secret password symbol.

The aim of a biometric system or mobile integrated module is the realization of the identification / authentication of people using some biological characteristic or physically measured behavior of the individual, in a safe and non-invasive way. The problem of identification and authentication of people is very old and has always tried in the past to be solved with different media: seals, titles, stamps, nameplates, etc. Today this is not enough and you need to introduce new legitimate user authentication and identification techniques to ensure that a person is who they say they are in many contexts.

There are many biometric techniques that try to recognize a person by their physical characteristics (iris, face morphology, fingerprint, voice recognition, etc.) or their behavior (gait, air gesture, manner of writing, online signature, etc.). It is vital in this document, by its similarity, to implement signature by a biometric technique online. Many works have been developed to improve this technique. They explain the basis for online signature verification. In this type of biometric identification testing, it is compared while the user is drawing on the screen to be matching to the one stored, and that the way to make such signature matches to what was done and recorded in the initial registration procedure by the registered user. To this end, various parameters are measured when making a signature, such as writing speed, pressure or angle of the pen at each point in time when the signature is done, among other features. These signatures may be performed in a special screen that collects and analyzes all necessary signals for analysis or on paper if the pen with which the firm is able to measure the signals described above and send them to a server where you perform the analysis and the signature verification

Document US 2014173692 discloses a mobile device attachment/sleeve for a BYOD device. It extends the functionality of the device to include security functions (authentication, secure networking, encryption/decryption).

Patent No: MX2007007539 describes a system implementing the biometric authentication using an electronic signature. This system includes an interface to a computer capable of storing the movement of a cursor on a computer screen and compared with already stored signature patterns.

The first object of the present invention relates to performing a highly reliable and unique user's authentication capability in a mobile device. Today, there are many applications, especially while aiming at the BYOD related applications of the user communicating with his employer enterprise IT resources that may be accessed from a mobile terminal, where it is necessary and even critical in many implementations to positively and reliably identify the legitimate user. For years the entrusted all security user's identification on mobile devices are based on a simple solution, that is to type a secret key (PIN) on the phone keypad that the user knew. However, these keys can be easily forgotten, transferred, lost or even counterfeit, so that user authentication is highly compromised. Focusing on the advanced and more secured biometric technique to authenticate a user with a mobile device is found in US2006286969 and in US2008005575.

Patent No: US2006286969 describes a remote authentication scheme to authenticate users from a mobile device. The biometric technique used is the voice recognition. The system consists of a mobile phone to send voice samples of an authentication device that connects to a database that stores the identities of mobile phones and voice pattern associated with that phone to make a comparison and check the user is talking on the phone is registered in the system. Patent No: US2008005575 proposes a method and integrated personal electronic device for authenticating a user on a mobile phone. While the user holds the phone to his ear, a microphone emits a signal near the user's ear and the speaker phone is able to measure the ear's response to this signal. A processor analyzes the response signal and converts it into a signature that uniquely identifies each person and can be used to authenticate.

Alternatively various bio-authentication techniques are known as gesture recognition, in which a system is able to detect when a user makes a certain known gesture. Patent Nos: US2009103780 and WO2009006173 relate to methods to recognize standard gestures. Patent No: US2009103780 includes a method for collecting the gestures produced by hand, based on light hand at first by the palm and the back, to get your silhouette associated from various lighting infrared, it proposes a method for collecting various hand movements and identifying a series of gestures previously stored in a database of gestures.

Patent No: WO2009006173 describes a method for detecting the response of an electronically gesture of a user while listening to a speaker using a mobile device, when performing a specific gesture. Related to the idea of recognition of a person by making a gesture is found in patent WO2007134433. It develops a method to authenticate a user when performing an action that manual manipulation of a device such as a mouse. Authentication is to obtain the gesture with the mouse by the user when chasing a target and compare it to the stored pattern of the user when that objective has been pursued previously.

Regarding the use of accelerometers in mobile devices, Patent No: US2005226468 describes authentication systems proposed to authenticate the user based on certain biometric sensors must be connected to the mobile device, and verifies that the authentication was successful based on a accelerometer that collects data on how to get the user's device, ensuring it is not a machine trying to cheat the system.

Also, Patent No: US2009030350 discloses a method and a system for analyzing patterns gaits of a subject by measuring the acceleration of the head in the vertical direction while walking. It uses an accelerometer that is placed on the user's head. The analysis includes the creation of a signature from the acceleration data when a user walks. In another invention the prior art also proposes the use of the patterns obtained by realizing the user gesture for generation or release of a cryptographic key, as described in Patent Nos: DE102005010698 and KR749380-B1. DE102005010698 describes the construction of a cryptographic key for secure communication independent from the fingerprint. It proposes to use that key to communication demand TV with pay per view applications, child protection or age verification.

KR749380-B1 describes a method to generate a key from a biometric characteristic that does not change with time as the iris. The biometric information is received and preprocessed, extracted some values and associated cryptographic key is obtained by grouping the values. The clustering error is corrected using a block of Reed-Solomon code. The obtained key may be applied to any cryptographic system.

Consequently, it is desirable to have a highly reliable mobile platform geared for best and highly secured BYOD use, that will be securely highly protected enabling safe access to the user's employer's Enterprise IT resources. Secured BYOD operation is enabled through a device integrated biometric recognition and authentication module, as will be further described in the present invention. The invention solution should avoid the drawbacks existing in the presently known BYOD use and management methods, and related mobile devices and systems, representing the present state of the art. The present invention solution should perform a biometric authentication process, which brings and combines the two general characteristics of biometric authentication: the physical characteristics and behavior.

Recently there is a new trend surfacing that may start to replace BYOD in the coming years. Corporately Owned, Personally Enabled (COPE) devices are the next big thing that within the coming years, some projections indicate 70 percent of global organizations will adopt it. BYOD is a concept that was floated first in Asia, where ClOs were quick to embrace the trend, but also recently realize it's hard to manage implications, such as: challenges in securing corporate data, an increased need for IT resources and support, increased costs, difficulty maintaining network performance, and challenges in managing a high multiple plurality of different user chosen devices and related required applications. Companies like BlackBerry, which was ahead of the curve in adopting BYOD, were also the first to try out COPE projects pilots, where the goal was essentially to show customers this model was a better, less risk-laden option for enterprise mobility than was BYOD.

The biggest difference between BYOD and COPE is the management of personal data on the device. Employees own their devices with BYOD, hence Bring Your Own, which gives organizations less control over how they are being used. It goes without saying that this leads to massive potential for security issues. It also puts an organization in peril, especially with the cases of sales force owning their own phone numbers. With COPE, the end user has more flexibility in choosing a mobile out of an employer offered reasonable selection, but the organization still has better and reasonable control over standardization, costs, security, and other areas of potential risk such as legal and HR implications. For example, corporations can dictate what carrier the organization uses and what devices can sit on the network but may, for example, allow users to indicate what apps they want on their phone and offer employees a device catalog to select from. This gives employees personalization options, while also minimizing the need for employer's IT to manage an overwhelmingly mixed range of devices. COPE also gives organizations the power to monitor policies and devices, beyond simply selecting which ones can be distributed. If the device is stolen, the company can send a wipe command. Organizations can also conduct automatic checks on malware and dangerous applications, sending warnings about certain apps to the device owner in order to proactively avoid potential issues.

When helping enterprise IT managers to migrate to COPE, a number of ways were found to aid organizations in further maximizing the benefits. One advantage is the ability to recycle devices as part of the contract. Alternatively, to keep costs down, buy communication devices in bulk. By doing so, enterprise can negotiate substantial discounts. To take that one step further, beyond minimizing just the device costs, outsourcing enterprise mobility contracts also enables organizations to make the best use of resources and budgets. Enterprise can negotiate usage-based plans, for example, to minimize unnecessary spend. Understand the benchmarks from cost benefits, usage statistics, and device performance. Benchmarking is important act when making a transition in the enterprise mobility model, as it provides a measureable way to evaluate costs, usage, and performance. Moreover, it enables executives within the organization to see the tangible benefits of a COPE model by clearly indicating the improvements in productivity, efficiency, and overall business execution from a numbers perspective. There are more hidden costs associated with BYOD than with COPE; costs to look out and get data to include device management and maintenance, personal service partitioning and impacts, and migration expenses, among other things. Due to dramatic improvement in device software upgrades, it's vital to ensure the internal systems are able to work with the latest software versions. This can have a bearing on how well COPE adoption can take place without substantial hidden migration costs. While COPE enables organizations to better control corporate assets over information, as well as tangible control, it also boosts employee satisfaction. This, in turn, results in a surge in employee productivity (evident from the days of BlackBerry) due to the shortening of decision support. So while today BYOD continues to dominate enterprise mobility discussions, COPE is phasing it out, as more organizations realize the benefits and flexibility that can be achieved though the COPE alternative model.

Therefore there is also a need in the art for enterprise employee users to have an easy to use and more secured mobile communication device that includes modules and methods for enabling high reliability, better security and ease of use of an integrated new way of authenticating of a legitimate user of the mobile device, and locking or unlocking its BYOD/COPE enterprise resources related communication and internal secured data access functions and the device's stored enterprise user's work related sensitive data, storage and access capabilities, in a case of negative or a positive user authentication. The need is for a secure BYOD/COPE solution that also does not suffer from the disadvantages of implementing present art traditional characters strings based password protection solutions and of other heavy security oriented data encapsulation installed BYOD/COPE separation SW solutions limiting the mobile communication device to much slower and reduced performance disadvantages of present art SW based BYOD/COPE adapted mobile devices and the related supported systems.

Regarding to terminology used in this document portable communication equipment, also referred to herein as a "mobile radio terminal", includes all equipment such as mobile phones, pagers, communicators, Notepads Notebooks and alike, e.g., electronic organizers, personal digital assistants (PDAs), smart phones or the like. It should also be appreciated that many of the elements discussed in this specification, whether referred to as a "system" a "module" a "circuit" or similar, may be implemented in hardware (circuits), or a processor executing software code, or a combination of a hardware circuit and a processor executing code. As such, the term circuit as used throughout this specification is intended to encompass a hardware circuit (whether discrete elements or an integrated circuit block), a processor executing code, or a combination of a hardware circuit and a processor executing code, or other combinations of the above known to those skilled in the art.

### SUMMARY OF THE INVENTION

The following embodiments and aspects thereof are described and illustrated in conjunction with devices, methods and systems, which are meant to be exemplary and illustrative, not limiting in scope. In various embodiments, one or more of the above-described limitations and emerging modern user's growing mobile devices daily secured use needs, have been solved, reduced or eliminated, while other embodiments are directed to other advantageous or improvements of securely managing a modern user personal and private medical data depository.

The core of the present invention is an advanced and highly reliable new approach to have and manage an enterprise employee user's work related data through an isolated secured platform to be used in conjunction and in tandem with the mobile communication device of the employee for separately and securely running and managing organization's applications/programs, as well as enabling and fully supporting the user's remote enterprise IT resources secured access and data exchange and storage of the sensitive organization data. The present invention device is an attachable smart electronic mechanically packaged sleeve shaped mobile device add-on case for attaching securely to the user's mobile phone, wherein the present invention add-on mobile device contains a CPU, SD flash based memory card, battery, a plurality of biometric sensors and wired digital data communication means to exchange data with the user mobile phone. Optional are the invention electronic sleeve internal independent power supply battery and a NFC and/or Bluetooth short distance wireless communication modules. With the invention device the users are authenticated for content entry permission by using advanced biometric identification techniques and algorithms. In addition, the invention electronic sleeve includes Near Field Communication (NFC) and/or Bluetooth communication means, which can be used also as personal bio-identification wireless key device for fully supporting user's biometric authentication requirement to enable highly secure physical access control needs.

The Invention is also supporting the user's BYOD related management needs on the user's dedicated data isolated smart computerized modular electronic device. The electronic device, designed as an add-on sleeve, is attached to the user mobile phone or palm device and securely interconnects and exchanges data through the user's personal mobile data communication integrated modem, residing on the users mobile device, which enables communication through the cellular and internet communication infrastructure with the external remotely situated employer IT resources. The invention also deals in particular with highly secured mobile communication servers based system, securely connecting and managing the users' devices two-way communication with their employer's IT resources.

The enterprise world is going through major changes related to the advancement of mobile devices - becoming Smartphone, Tablets or the upcoming wearable devices. The popularity of those devices and their use for many personal applications if fast growing and expanding while their increase capabilities may lead for enterprise as well as for the employees to use personal mobile device as access point to the enterprise computer servers and IT resources. The ability of using the smart mobile as an enhancing of user's productivity tool, made it also the replacement for the desktop and note-book for many professionals employees being able to run their business activities out of office, while travelling, or at home. "Bring Your Own Device" (BYOD) is a major trend in the enterprise IT infrastructure.

The BYOD concept smart-mobile being used by enterprise employees, both for personal use and organizational use is a major security headache and high expenses management burden for IT and network security officers in enterprise organizations. The existing security solutions on the employee's mobile phone must keep a balance between security and the user's usability. This balance leads to security compromises which might affect the entire enterprise network security. The present invention device and its related based communication system with the user's employer enterprise, is offering a new solution approach based on a separate and highly secured data storage and communication management mobile phone add-on sleeve device. The new Sleeve enables also secured communication and secured email features, securely managing sensitive emails between the user and work related emails coming through the enterprise email servers.

It provides for the enterprise sensitive data management requirements the required physically hardware based protected area not available yet even in the newer Smartphones and operating systems security. The invention combined communication phone and secured data management attached sleeve is creating a fully managed and secured integrated new device having its own encryption capabilities, protected keys and secure operating system. The invention combined device provides the protection required for sensitive documents storage and management, and securely managing valuable corporate IP and commercial data assets. The invention combined device and related invention enhanced BYOD related combined hardware and SW based system are also capable for protecting employee's email account as well as running enterprise applications in a protected environment.

The present invention advanced user authentication biometry makes sure that only authorized users should be able to have access to the secured data. The present invention combined secured communication device and system is planned to be part of the organization IT or IT service provider's secured network, while keeping the users private mobile free for the user's daily normal use without any restrictions.

Enterprise proprietary and sensitive data depository storage on the present inventions dedicated mobile devices there is a need to highly protecting the invention mobile device stored medical data depository against intruders, hackers and mal use. The invention device has an integrated highly reliable authentication module, analyzing the user's at least one biometric sensors measure output when user's authentication is done while the user is holding the mobile device and operating in tandem the biometric sensors measurement on his relevant human body parts and on monitoring his unique human behavior parameters.

One of the main objects of the present invention proposes the creation of a positive and highly reliable and secured user's authentication by implementing an advanced fusion by advanced algorithm through a dedicated computer SW embedded within the invention electronic sleeve device that is processing the measured outputs of at least one biological sensors and measuring their output in tandem as the user's more reliable combined authentication means.

Two of the preferred embodiments of the present invention biometric identification and authentication means and methods may be the user's face recognition and by imaging and analyzing the image of the user's hand palm and fingers morphological pattern, in another novel embodiment of the present invention the image of the palm may include also the veins and minor blood vessels seen on the palm surface image while imaging the palm with an IR sensitive camera sensor and illuminating the palm with an near IR illumination source such as a high intensity IR LED. Other mean may be by a human movement or gesture pattern while the mobile device is intentionally moved in the air while held in the user's hand in a personalized movement pattern that identifies a user, taking into account that this gesture will only be known by the user and also that physical characteristics, it will perform differently to other people who might try to repeat the gesture. Focusing on technical status related to the present invention, it should be noted that performing gestures to biometrically authenticate a person on a mobile device using 3D in-air gestures measured with an accelerometer is novel.

A first aspect of the present invention comprises a mobile electronic device which enables a user to authenticate himself through the parallel in tandem operation of the present invention mobile electronic device internal integrated set of at least one or more biological sensors capabilities and then to enable a function of the mobile electronic device using its internal CPU module to differentiate between the authenticated legitimate user and a none authenticated none legitimate user by analyzing and detecting the user's personal unique biometric sensors output measurement such as the user's face pattern image, the user palm and fingers image analysis and the user's personalized movement sequence, while 3D moving the mobile electronic device in the air.

The mobile electronic device comprises a 3D acceleration measurement module generating an acceleration signal representing the user hand motion in space while holding and uplifting the mobile electronic device. A lock/unlock circuit enables operation of at least one function of the mobile electronic device in response to the measured 3D acceleration signal indicating that the user holding the mobile device hand motion pattern deviates from pre-recorded reference original owners hand motion uplifting movement signal data, while holding and uplifting the mobile device by more than a predetermined threshold.

The lock/unlock circuit may further comprise an integration module and an executable authentication process module. The integration module integrates the acceleration signal with respect to time to generate a velocity signal and a displacement signal. The executable authentication process: i) compare a representation of the displacement signal and the velocity signal, with or without the acceleration-measured signal, to the reference motion data. The reference motion data comprising reference displace; and ii) enables operation of at least one function of the mobile electronic device if the representation of the displacement signal and the velocity signal and the acceleration signal data deviate from the reference displacement data and velocity data and the measured acceleration data by more than a predetermined threshold. The reference motion data may also represents the device legitimate user's simple three dimensional gesture movements in space and the user motion represents the device user moving the electronic device in the same simple three-dimensional gesture.

One preferred embodiment of the present invention enhanced BYOD system supports a user's remote work required interaction functions with the employer enterprise management system. The system is combined of a plurality of remotely distributed employees owned identified users' controlled integrated mobile personal devices, each said personal device containing a secured Enterprise user's work related management data module, each said integrated mobile personal device constructed of a combined mobile communication device together with an attached mobile electronic sleeve device, said sleeve functioning as a private user bio-authentication and enterprise secured data communication and related work records files storage and management platform, the system comprising: a. a system gateway server operating as said system manager for managing and updating communication addressing ID data of said system plurality of remote BYOD work management employee users private mobile devices and for securely communication between each of said plurality of said BYOD remote work employees mobile devices with their employer enterprise IT resources; b. a memory sub-system connected to said system gateway server to store updated ID data of said mobile devices and any required associated user data of each of said plurality of said mobile devices users; c. a plurality of personal mobile devices units, each of said mobile devices being associated with a unique user, each unique ID data of said mobile devices being registered with said system gateway server and wherein the ID data file of each unique ID data of said mobile devices being stored in said memory sub-system; .d. wherein said gateway server enables access and creates a communication link with the any of said system registered BYOD work management employee users through their said private mobile devices containing said user's work related management data and documentation files; and e. wherein said access to any user's requested said device stored work related data and documentation files and two way data communication with said user remote employer enterprise IT data resources is only enabled after positive authentication of said unique user's enabled by said user mobile personal mobile device.

Unless otherwise defined, all technical and/or scientific terms used herein have the same meaning as commonly understood by one of ordinary skill in the art to which the invention pertains. Although methods and systems similar or equivalent to those described herein can be used in the practice or testing of embodiments of the invention, exemplary methods and/or systems are described below. In case of conflict, the patent specification, including definitions, will control. In addition, the materials, methods, systems and examples herein are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

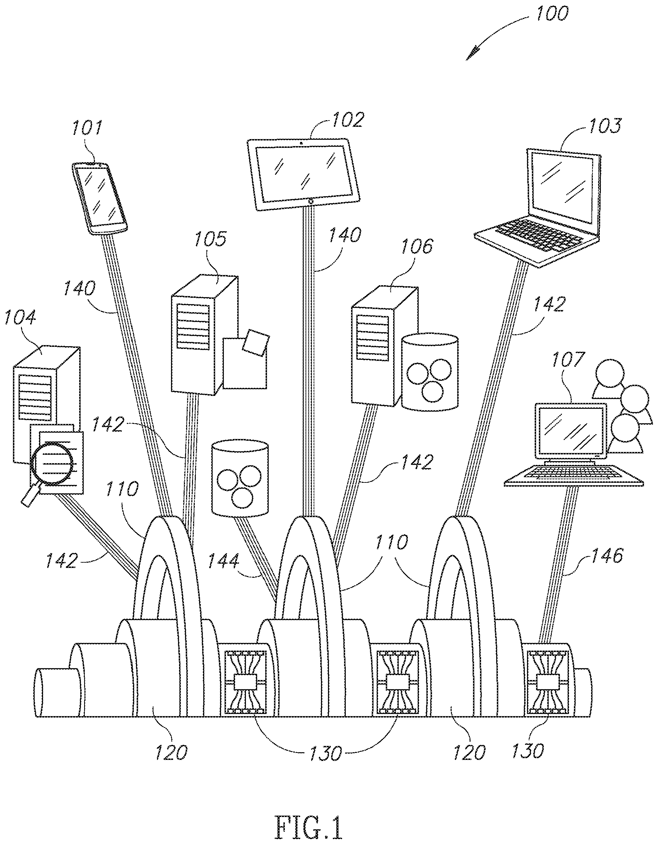

FIG 1 is a schematic visual illustration of a schematic 3D layout of the typical present art BYOD system comprised of multiple employee users computerized devices, both mobile and stationary computerized devices, connected through security management envelops with the enterprise core internal IT management network.

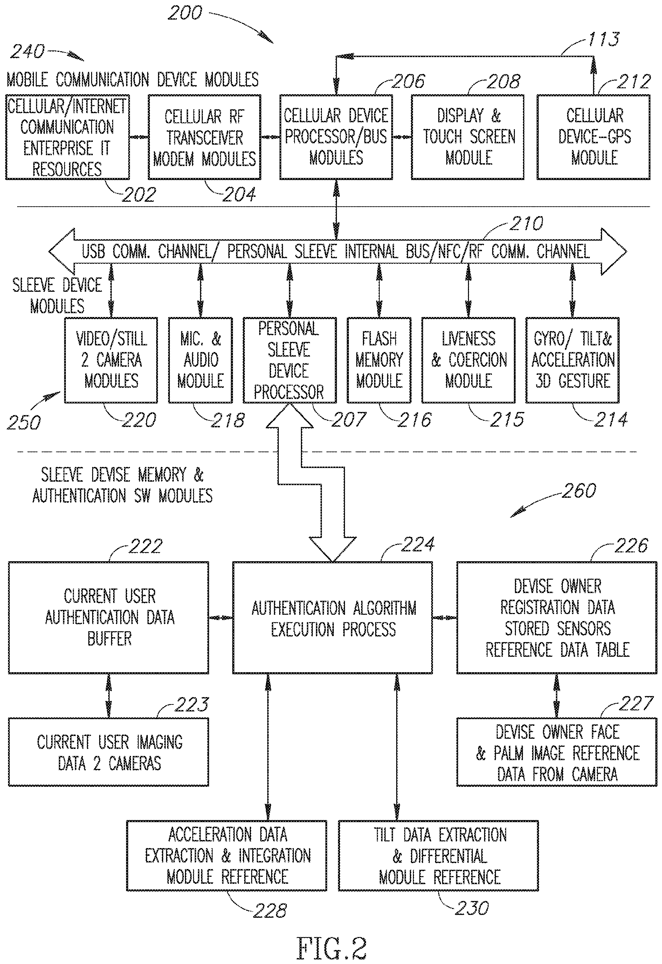

FIG. 2 is an illustration of a schematic block diagram of one possible embodiment of the present invention mobile personal electronic device configuration, wherein it has combined configuration comprising the invention electronic sleeve shape add-on device that includes a microprocessor module, a large storage capacity Flash memory, a user authentication module, an acceleration detectors module, a tilt detectors module, an audio microphone module, two cameras and related image processing module, It also demonstrates the attached second present invention device combining mobile communication device that includes the invention personal electronic device implemented and used display and touch screen interaction module and an RF cellular communication module and a GPS location module.

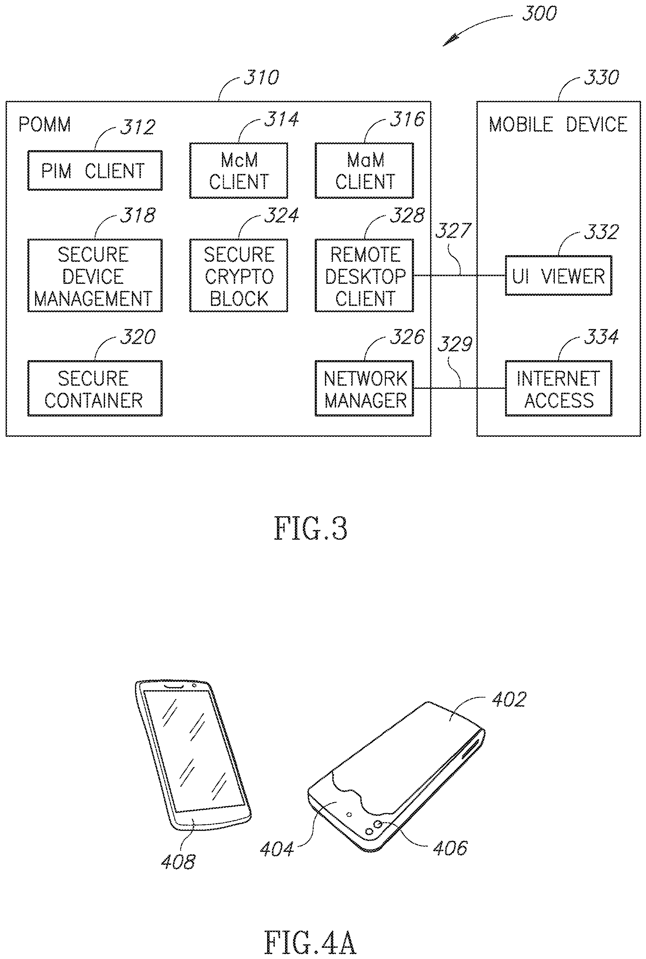

FIG. 3 is a schematic illustration of the present invention integrated mobile personal electronic device combined of the user mobile device and the invention electronic sleeve. The figure demonstrates the functional modules residing on each of the two present inventions integrated device components.

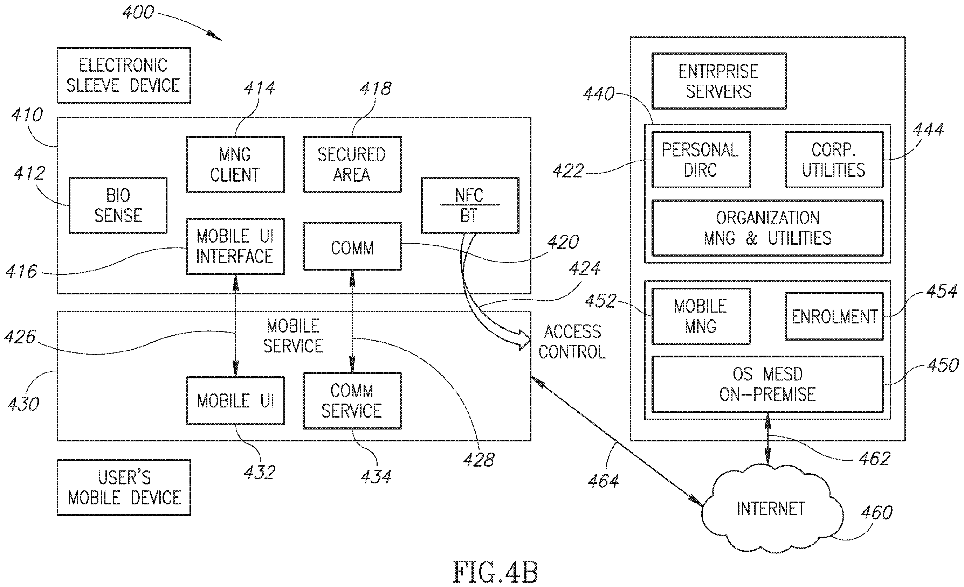

FIG. 4 is a schematic illustration of an example of a computerized enhanced BYOD management system, according to one embodiment the present invention system.
   The schematic illustration shows another preferred embodiment the main functional modules of the user's invention integrated mobile personal electronic device combined of the user mobile device and the invention electronic sleeve. This device is connecting through the cellular and internet managed cloud to the user employer IT management infrastructure.
Figure 5 is a schematic illustration of one possible embodiment of the present invention process of the Personal Information Management (PIM) functioning of the employee's user invention integrated mobile personal electronic device with the employer enterprise server.
Figure 6 is a schematic illustration of one possible embodiment of the present invention process of the Content Management process functioning structure of the user invention integrated mobile personal electronic device while functioning interaction elements with the enterprise server.
Figure 7 is a schematic illustration of one possible embodiment of the present invention process of the Application Management interaction functioning elements of the user invention integrated mobile personal electronic device with the enterprise server.

### DETAILED DESCRIPTION OF THE INVENTION

The present invention, in some embodiments thereof, relates to mobile devices user's enhanced BYOD applications and use related solutions and, more particularly, but not exclusively, to methods, a device and a system to manage and conduct mobile devices bio authentication and enhanced BYOD performance related communication execution between the employee users and the employer enterprise resources.

Before explaining some embodiments of the invention in details, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As will be appreciated by one skilled in the art, aspects of the present invention may be embodied as a device, a system, and a method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, integrated personal electronic device, or device, or any suitable combination of the foregoing. More specific examples (a non-exhaustive list) of the computer readable storage medium would include the following: an electrical connection having one or more wires, a hard disk, a random access solid state memory (RAM), a read-only memory (ROM), an erasable programmable read-only memory (EPROM or Flash Memory), an optical fiber, an optical storage device, a magnetic storage device, or any suitable combination of the foregoing. In the context of this document, a computer readable storage medium may be any tangible medium that can contain, or store a program for use by or in connection with an instruction execution system, integrated personal electronic device, or device.

A computer readable signal medium may include a propagated data signal with computer readable program code embodied therein, for example, in baseband or as part of a carrier wave. Such a propagated signal may take any of a variety of forms, including, but not limited to electronic, electro-magnetic, optical, or any suitable combination thereof. A computer readable signal medium may be any computer readable medium that is not a computer readable storage medium and that can communicate, propagate, or transport a program for use by or in connection with an instruction execution system, integrated personal electronic device, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's smartphone, partly on the user's smartphone, as a stand-alone software package on the user electronic sleeve shaped add-on computerized device, partly on the user's smartphone and partly on a remote computer, or entirely on the remote computer or server. In the latter scenario, the remote computer may be connected to the user's mobile device through any type of network, or the connection may be made to an external computer (for example, through the Internet using an Internet Service Provider, or through a cellular service provider).

Aspects of the present invention are described below with reference to flowchart illustrations and/or block diagrams of devices, methods, systems and computer program products according to different embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a smartphone, on an electronic sleeve shaped smartphone add-on computerized device, a notepad, a laptop, a special purpose computer, or other programmable data processing integrated personal electronic device to produce a machine, such that the instructions, which execute via the processor of the computer or other programmable data processing integrated personal electronic device, create means for implementing the functions/acts specified in the flowchart and/or block diagram block or blocks.

These computer program instructions may also be stored in a computer readable medium that can direct a computer, other programmable data processing integrated personal electronic device, or other devices to function in a particular manner, such that the instructions stored in the computer readable medium produce an article of manufacture including instructions which implement the function/act specified in the flowchart and/or block diagram block or blocks.

The computer program instructions may also be loaded onto a smartphone a mobile or portable computerized device, other programmable data processing integrated personal electronic device, or other devices to cause a series of operational steps to be performed on the computer, other programmable integrated personal electronic device or other devices to produce a computer implemented process such that the instructions which execute on the computer or other programmable integrated personal electronic device provide processes for implementing the functions/acts specified in the flowchart and/or block diagram block or blocks.

Reference is now made to FIG. 1, which is an illustration of an visual illustration of a schematic 3D layout of the typical present art BYOD system **100** comprised of a multiple employee users mobile devices and computerized devices, representing both three typical types of mobile devices, smartphone, note-pad and laptop **101,102,103** and various types of stationary computerized PC devices **104,105,106,107,** all connected through security management envelops **110** with the enterprise security access protection layer **120** and through it to the enterprise IT management core **130,** that is including the enterprise internal servers and IT management system and also including internal data communication network and the related data flow.

Reference is now made to FIG. 2, which is an illustration of an example of a computerized mobile electronic device hardware and software content and related modules combined configuration, according to the present invention. The Invention Mobile personal electronic device **200** is combined of **240** which is a representation of an exemplary present art mobile personal electronic device **240** (smartphone) geared for serving as a single user BYOD secured and safe communication means with the User Employer enterprise servers and computerized resources. The second invention attached add-on device **250** is serving the user/employee as a personal data storage, updating and management tool with a built-in user's bio authentication capabilities, based on at least two device's integrated biometric sensors output analysis of the user device holding person, done while the user holding in his palm the invention integrated personal mobile electronic device **200.** The present invention integrated mobile device **200** is communicating through the cellular and internet communicating networks with a the user employer enterprise IT resources **202** through the cellular wireless networks, as required to operate some of the dedicated functions related to the present invention mobile personal electronic device user's enhanced BYOD remote work related management functions. The invention integrated mobile device Cellular RF transceiver and Modem module **204** is representing the mobile device module that supports and enables the device cellular and internet supported data communication with the remote Enterprise IT resources **202.** The mobile communication device processor **206** is controlling the entire mobile communication device with various functions of communication, display and user's flat screen **208** graphic management and processing capabilities. The invention electronic add-on sleeve **250** processor **207** is managing the sampling and the processing of the device movement sensors **214** output data and the imaging **220** and **218** voice sensors, as required to support the execution of user's authentication program module **224.** The Authentication analysis and execution module **224** operation is based on the user gesture movements analyzed against the reference enrollment stage recorded and stored reference data **228 and 230** and in parallel, or by the user selected sensor alternative, also compared with the face and palm recorded reference image data **227,** compared with the user's face and palm real time sampled images recognition measure data **223** and the user's voice processing **218** sampled data. The display module **208** is a combination of a graphic/image display screen and a touch sensitive screen to support the user's various interactions and the display of the user's touch screen interactions results with the mobile personal electronic device **200** executed for the user through the mobile communication device **240.** The electronic sleeve shaped electronic add-on device central internal data communication bus **210** is communicating between the mobile device and the invention sleeve device through the device **250** integrated USB hardware interface and through a NFC, Bluetooth or other RF based wireless short distance communication channel, combining together the described communication channel **210** operating within the add-on sleeve device **250. 210** supports the needs to transfer data and commands between the various modules of the invention integrated personal mobile device **200** - combined of mobile device **240** and the invention mobile add-on sleeve **250.** Module **220** is the mobile device add-on sleeve which has a resident internal still/video imaging module **220** including one or preferably two or more electronic camera units, equipped with aided LED visible and near infrared active illumination that support the imaging of the device user face and/or palm, in order to document and authenticate the user according to his face and/or palm & fingers details pattern according to some embodiments of the present invention. Audio module **218** is including at least one microphone that enables the voice identification of the user as one of the selected biometric sensors required for the potential execution option of the user's authentication, based on the user voice personal characteristics analysis. Flash memory module **216** is at least one or more modules of solid state flash based memory modules (optionally a SD card) resident within the electronic sleeve shaped add-on device **250** that holds the operational software of the sleeve shaped add-on device **250,** as well as the device **250** functional software modules **222,224** and **226** that support the invention integrated mobile device **200** requirements to function as an isolated BYOD management secured communication and storage devise of the employee/user and serving also as a secured data personal depository of the device 200 single owner user/employee to hold in memory **216** also sensitive work related encrypted data files. Liveness and Coercion related measurement and results analysis module **215** is serving as a measurement sensor to detect and measure several liveness parameters of the invention device holder and based on these measurement to decide if the device **200** holder is a live person not a fake image and also defining if he is under a substantial emotional pressure, or is in a normal state of mind. Tilt and acceleration 3D sensors module **214** is a unit resident within the invention integrated mobile device **200** with the electronic sleeve add-on sleeve device **250** that measures the linear acceleration on the three orthogonal axis of the device and the 3D tilt angles of the sleeve device **250** in space. GPS module **212** is another important built-in sensor, resident within the present invention mobile communication device **240,** wherein the GPS **212** world coordinated device dynamic poisoning reading is fed through communication channel **213** to cellular device processor module **206** so to enable the allocation of the device in case of an employee not in his natural work place during work time or in case of the user problematic medical situation emergency cases or for supervising of the employee not natural expected location during work hours when is required to be detected and monitored by the user/employee employer.

Authentication data buffer module **222** which is a part of the electronic add-on sleeve device **250** memory and authentication sub-section **260,** is a secured memory buffer containing the device biometric sensors sampled data of the mobile personal electronic device user's authentication reference data, as the stored digital converted output of the various sampled mobile electronic sleeve shaped device **250** resident biometric sensors, wherein the biometric data is collected and stored during the user first and initial enrollment registration process. The data buffer module **222** is also connected with sub-module **223** that samples and stores at registration/enrollment the current user face and palm images digitized reference data, to further use it as the user's additional channels of bio authentication sources, according to the one or more of the present invention authentication embodiments. Module **224** is the central SW module in the present invention electronic sleeve device **250** managing the selection of optimal process for selection, choosing and executing the optimal residing authentication algorithm, choosing the optimized one of several authentication algorithms and significant user identification sensors selectable sources options. The **224** module does the analysis the user's biometric sensors **220, 218, 230** and **227** modules output. The **224** module also creates the improved quality and reliability of the authentication process of the integrated mobile electronic device **200** while fusing together the user's measured biometric sensors output, wherein the method is implementing into the authentication process the user hand in air 3D gesture, the user's face pattern and the palm recognition imaging data, as the first, the second and the third selectable sources of the user's bio personal data, thus enabling an optimal quality authentication process, combining gesture, face and palm personal bio data.

Module **224** has in one of the invention embodiment another function with an additional set of SW based group of functions **260** designed for execution in the cases that the authentication process of the current device holder is indicating a failure which is a non-authenticated user case. In such a case the module **224** is creating a series of preprogrammed alarm functions, optionally creating audio alarm set of signals on the audio module **218** and displaying visual eye attracting flashing images through the display module **208.** In parallel alarm data is sent from the invention mobile device to a remote cellular service provider and through it to a set of the users who are the device owner group of pre-selected piers to notify them on the event of theft or loss of said device **200** and the location of the theft, as it is constantly read and transmitted by the GPS module **212.** Software module **226** is storing and managing legitimate user reference registration data, as required by present invention integrated mobile personal device **200,** while managing the registration procedure of the legitimate user prepared and stored by module **226** to serve as the reference set of data while compared to the current user biologic sensors measured and processed authentication data. A sub module connected, functioning with and used by module **226.** SW module **227** stores and manages the legitimate device owner face data including its face recognition parameters and also stores and manages the registered user's piers (friends and family) face recognition data to avoid false operation of the device alarm functions when one of the legitimate user's piers is by mistake lifting and holding the invention theft and loss protected mobile device. Module **228** is a SW module that manages the extraction of the sampled output of a set of sensors and also in processing integration algorithms on the acceleration measured device results data in order to achieve data related to the device velocity and position in space, based on the acceleration data one time and two times integration calculation results, Module **230** is a SW module that manages the extraction of the sampled gyro based tilt measurement 3D set of sensors and also in processing derivatives algorithms on the tilt angles measured device data results, in order to achieve data related to the device angular velocity and angular acceleration in space, based on the measured 3D tilt angles data, one time and two times derivatives calculation results,

Reference is now made to FIG. 3, which is a schematic functional blocks representation illustration of the present invention integrated mobile personal electronic device **300** combined of the user mobile device **330** and the invention electronic add-on sleeve **310.** The figure demonstrates the functional modules residing on each of the two present invention integrated device and its module components **310** and **330.**

The electronic sleeve add-on device **310** Secure Device Management module **318,** located in the invention electronic sleeve add-on device **310** is responsible to communicate with enterprise MDM Server component on the enterprise network and perform the required function. The electronic sleeve add-on device **310** management functions include: 1) online monitoring of the MDM server of all MDM clients for currently connected devices **300,** 2) Enforcing remote wipe of locking for compromised devices and 3) Logging of user action on the electronic sleeve add-on device **310** by the McM client **314** and sending periodic reports to MDM server at the enterprise remote side.

The invention electronic sleeve **310** devices interact with the mobile device **330** with two channels **327** and **329:** 1. Remote desktop client module **328** is interacting with the mobile device **330** UI Viewer **332** through UI Channel **327;** and 2. Network channel **329** is interacting between the module Network Manager 326 residing on the invention sleeve device **310** and the Internet Access module **334,** residing on the Mobile device **330** . In the UI channel **328** the mobile is acting as a remote viewer **332** to the invention electronic sleeve **310,** enabling the user to interact with invention electronic sleeve **310** through the UI Remote Desktop Client module **328.** Through the network channel **329** the mobile **330** is acting as a cellular modem and internet access gate **334** to the invention electronic sleeve **310,** enabling network communication with the corporate/enterprise servers.

Figure 3 represents the high-level modules in the invention electronic sleeve **310** devices for supporting these management functions. The present invention enhanced BYOD system supports enterprise mobility management in four categories operated through dedicated module on the invention sleeve devise **310:**
- Device Management (MDM), **318**
- Personal Information Management (PIM), **312**
- Content Management (McM), **314**
- Application Management (MaM), **316.**

The functionality derived from each of these categories require client components on the invention add-on electronic sleeve device **310,** as well as server components on the enterprise network to communicate with these clients. The Client-Server components are:
- Enterprise MDM Server - Secure Device Management client. **318,** on sleeve **310**
- Enterprise PIM Server - PIM Client, **312** on sleeve **310**
- Enterprise MaM Server - MaM Client, **316** on sleeve **310**
- Enterprise MCM Server - MCM Client, **314** , on sleeve **310**

In addition to these components in the invention electronic sleeve **310** device based system, it include also a Enrollment server for registering the invention electronic sleeve **310** devices to the enterprise system for identification purposes

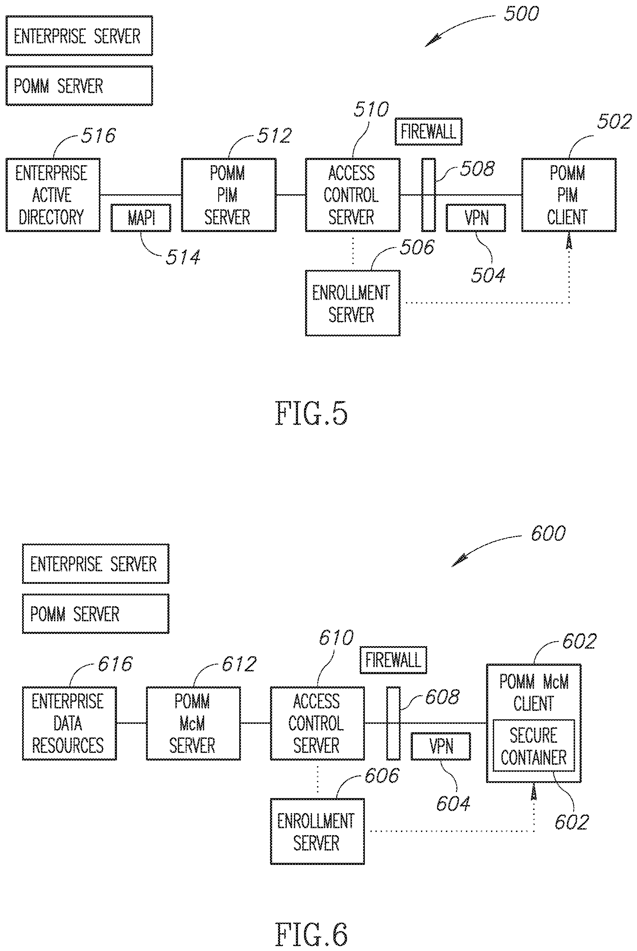

The Following Figures 5, 6 and 7 describe the invention enhanced BYOD related system processes, needed to support the four enterprise mobility categories.

In the invention device **300** Enrollment Process, this is a process in which the enterprise system is registering the invention device in order to identify the access request from the invention device. This process is done by Enrolment Server which includes all necessary invention device private and public keys.

The enrollment is done by connecting the invention device **300** physically to the Server with USB connector. The enrollment process includes key provisioning for the invention device **300,** as well as biometric enrollment of the employee.

The invention add-on sleeve device within the **310** Secure Device Management module **318** located in the invention device **300** is responsible to communicate with MDM Server component on the enterprise network and perform the required function. The Device **310** management functions, includes:
- Online monitoring of the MDM.
- Enforcing remote wipe of locking for compromised devices.
- Logging of user action on the invention device **300** by the MDM client **318** and sending periodic reports to MDM server.

Reference is now made to FIG. 4, which is an illustration of an example of a computerized enhanced BYOD management system **400,** according to one embodiment the present invention system.

In Figure 4A, a schematic physical view illustration shows another preferred embodiment of the invention mobile device **200** main functional modules **404** and **402,** combining these physically connected two functional modules, thus creating together the user's invention integrated mobile personal BYOD use oriented electronic device **200,** combined of the user mobile device **402** and the invention electronic add-on sleeve **404,** wherein the mobile device **402** is fitted and locked inside a dedicated recess in the electronic sleeve **404,** where a USB connector installed at the end of the **404** recess is electronically connecting the two modules for a data exchange requirements and for power charging both devices through the USB connector at the external lower side of the **404** sleeve. **406** is illustrating the front aperture of one of the two imaging cameras integrated within the add-on sleeve **404. 408** show the invention add-on sleeve without the mobile phone inserted in it. This combined device **404+402** is connecting through the cellular and internet managed cloud to the user employer IT management infrastructure.

Figure 4B is a functional schematic illustration of the invention combined mobile device dedicated to BYOD functioning communicating with the Employer dedicated servers and SW modules managing the secure communication between the employees BYOD adjusted devices and the employer IT resources. It shows the add-on sleeve device **410** that is including the user's authentication oriented bio-sensing module **412,** and the device client data processing and management module **414** based on the internal integrated powerful CPU. Secured area **418** includes a security protected area for storage in employee sleeve device **410** of sensitive files of the user employer enterprise proprietary data. Communication unit **420** includes hardware based USB communication capability **428,** as well as a NFC and/or Bluetooth short distance communication capability **426** to transfer secured data files between the mobile device **430** and the present invention add-on electronic sleeve device **410,** physically attached as a binding sleeve to the user smartphone unit . The sleeve device **410** has also a built-in NFC/BT output unit **424** that enables it to connect from short distances with kiosks, ATMs or PCs that enable device **410** to upload and download data from external terminals.

The invention new BYOD oriented device is including in it a mobile device **430** that includes in it a SW communication management sub-unit **432** that creates and is in charge of the wireless communication **464** through the cellular networks and the Internet infrastructure **460** between the BYOD mobile device **430** and the connected invention electronic sleeve **410** and the Employer remote IT resources **450** and **440** through its internet communication link **460.**

The invention BYOD mobile device **430** is connecting through link **464,** based on its integral cellular communication modem and communication SW based means **434,** to the internet **460,** supporting internet/cloud communication for the long distances that are typically required for the remote user/employee hand held communication device to connect to the IT infrastructure supported by the employer IT resources multiple servers manager **440.** Remote Enterprise BYOD application management **440** requires supporting servers included in units **450** and **440.** To let the enterprise servers to recognize and further accept the legitimate enterprise worker/ user personal device, the employers servers are first conducting for every new remotely detected user/employee, an enrollment procedure, so there is also at the Employer IT management side a detected employee BYOD device first access enrollment to be processed through enrolment management server **454.** A Mobile Management Server at the Employer IT resources side **452** is in charge of the secure data communication management with all the remote multiple employees BYOD devices **410+430.** Enterprise servers unit **440** Organization Management and Utilities includes in it also the personal directory server **442** that is managing the remote user's data base and the secure data flow and transfer between the multiple remote users using their personal BYOD **410+430** devices and the enterprise IT resources. Corporate utilities server **444** manages a plurality of remote access services to the remote BYOD users, such as electronic mail and secure access to employees-corporate directories **442** and internal enterprise management resources **444.**

Reference is now made to FIG. 5, which is a schematic block diagram illustration **500** of one possible embodiment of the present invention system BYOD functions management SW modules and its configuration and the related secure communication process of the Personal Information Management (PIM) SW module **502** residing on the user/employee BYOD device functioning the controlled execution of the employee's user integrated mobile personal electronic device **410+430** communication with the employer enterprise dedicate MESD On Premise servers unit **450.**

It also demonstrates the user's communication through the VPN 504 SW management module with the enrollment server management module **506** for the user first time initial registration procedure into the enterprise system BYOD processes control servers; the Access Control **510,** the POMM PIM Server **512** and the Enterprise Active directory server **516.**

The invention device **410+430** POMM PIM Client SW module **502** specific user/owner employee enrollment process is a process in which the enterprise system is registering the invention device **410+430** in order to identify the legitimate access request from the invention device **410+430.** This process is done by Enrolment Server **506** which includes all necessary invention device **410+430** private and public security management keys. The enrollment is done by connecting the invention device **410+430** to the Server **506** through a VPN data link. The enrollment process includes key provisioning for the specific user/employee invention device **410+430,** as well as the biometric enrollment of the employee.

In the PIM operational mode, the invention device **410+430** through its integrated POMM PIM Client SW module **502** can view and interact with the enterprise Personal Information Directory **516,** functioning such as an Active Director and enabling the remote employee user to receive corporate emails and view his personal work related missions and meetings calendar. The Process of accessing the personal directory is starting with creating a VPN **504** connection through the firewall **508** to the Access Control Server **510** of the enterprise. After the invention device **(410+430)** integrated POMM PIM Client **502** is assigned an internal IP, the invention device PIM client **506** can communicate with the invention device PIM Server **512** through the Employer IT integrated Firewall protection module **508** and the Access Control Server **510** and then securely interact through this server using the MAPI supported internal Employer IT resources capabilities **514** with the active directory executed through the Exchange Server **516.**

Reference is now made to FIG. 6, which is a schematic block diagram illustration **600** of one possible embodiment of the present invention process of the Content Management process functions of the user invention integrated mobile personal electronic device **602** while functioning its interaction elements with the enterprise Access Control Server **610** and the POMM McM Server **612.**

In Content Management operational mode the invention device client **602** must enforce policies like copy/paste restriction on top of the Secure Storage Container **603.**

The process of content management begins with VPN **604** connections to the Access Control Server **610** through the Firewall protection layer **608.** Then the McM Client **602** can access through the Access Control Server **610** to the McM Server **612** and navigate through this server **612** for reaching and accessing the Employee work required corporate data resources **616.** Once the requested data is found, the McM Server **612** binds the data with security policy, which is enforced by the McM Client **602.** The McM Client **602** is the only device residing module that allows dealing with corporate data in the invention device. The McM Client **602** also stores the data locally in a secure container **603** that is inside the invention device **410+430** client **602.**

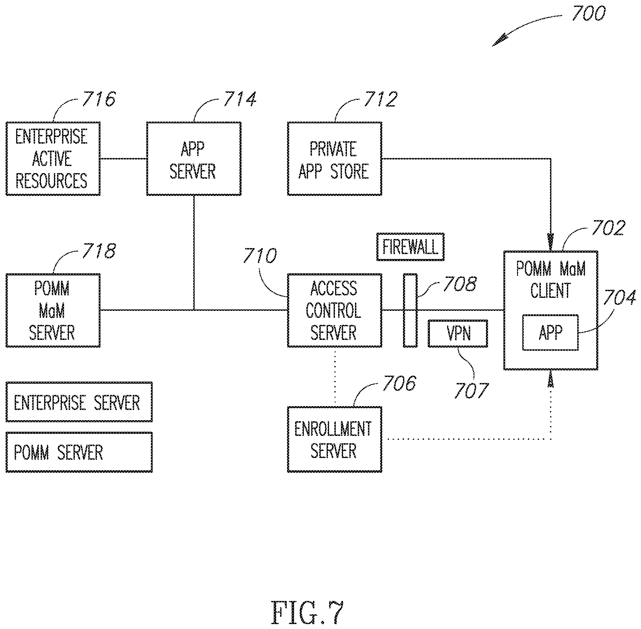

Reference is now made to FIG. 7, which is a schematic block diagram illustration of one possible embodiment of the present invention BYOD functioning related management process of the Application Management interaction between the POMM server and the Enterprise Server **700,** while functioning the data management elements between the user invention integrated mobile personal electronic device **410+430** and its POMM MaM Client **702** with the enterprise Access Control server **710,** the App management server **714** and the POMM MaM Server **718.**

In Application Management operational mode the enterprise application are running on the invention device and the device integrated MaM client **702** that is controlling the lifecycle of the application and security policies. The process begins with the invention device **410+430** POMM MaM Client **702** downloads through Firewall protection layer **708** and Access Control Sever **710** data streaming through the application server **714** from the corporate private data resources store **716.** In Some cases due to the BYOD use dual purpose employee's communication life management strategy, the POMM MaM client **702** can also download required Application for a specific non-work related task from its connected Private App store 712. The MaM client **702** when in a work related mode is then communicating with the MaM server **718** for policies of the application and the corporate data **716** it needs to access. The MaM client ***702*** is also responsible for communicating with the private app store **712** in case that specific data content update or removal is needed.

It will be appreciated that the present invention is not limited by what has been described hereinabove and that numerous modifications, all of which fall within the scope of the present invention, exist.

Rather the scope of the invention is defined by the claims, which follow:

## Claims

1. An integrated mobile personal electronic device (200) for securely communicating, managing and updating user's work related tasks and in parallel supporting the user's private life daily operations, comprising:
a mobile communication device (240) equipped with a cellular modem (204) to enable data communication over cellular and internet networks, said mobile communication device (240) configured to receive and send both the user's employer enterprise work related data as well private data with a plurality of sources;
***characterized by*** said integrated mobile personal electronic device (200) comprising an electronic sleeve (250) configured to be attachable to said mobile communication device (240) to create together with said communication device (240) a unified single device (200), said sleeve (250) comprising at least a CPU (207), a solid state large capacity secured memory module (216) equipped to seperately store and manage said user's work and personal data, a RAM unit and an at least one biometric sensors module (215);
wherein; said biometric sensors module (215) comprises at least one biometric measuring parameter sensor, each of said at least one sensors measuring and generating a different biometric parameter;
wherein said electronic sleeve (250) contains a software module (260) that activates a set of functions for enabling secured access and communication between said sleeve (250) with a plurality of operational functions of said user work related tasks residing at said user remote employer enterprise IT resources; said sleeve (250) storing secured enterprise work related data and said sleeve (250) storing registration biometric data uniquely associated with the unique legitimate user,
wherein in response to said biometric sensors module (215) measured and sampled signal sequence, followed by said sleeve CPU (207) receiving positive authentication of the unique legitimate user, said electronic sleeve (250) activates and creates direct two-way secured data communication channel (210) through said communication device cellular modem (204) between said user and said user remote work enterprise IT resources, and
wherein said at least one of biometric sensors (215) continuously reads and analyzes a plurality of personal biological identification parameters with the person holding the integrated personal electronic device, said identification parameters associated with registered user and in the event that a noticeable change occurs in any of said measured personal biological identification parameters, access to the enterprise's data files stored in the sleeve (250) is denied and the operation of said electronic sleeve device (250) is completely shut down while the operation of said mobile communication device (240) remains functional.

2. The integrated mobile personal electronic device (200) of claim 1, wherein:
said set of user's work related tasks activation and operation is executed when at least two biometric parameters are compared by said sleeve CPU (207) to registration biometric data associated with the unique legitimate user stored on said sleeve memory (216);
wherein said pre-recorded sampled registration biometric data is recorded upon the unique legitimate user executing on said mobile electronic device (200) an initial supervisor controlled registration procedure, enabled by said at least one biometric sensors output being recorded and securely stored on said electronic sleeve memory (216) for further user's system entry authentification;
wherein said related set of user's work tasks is positively activated and said device sleeve secured memory (216) is unlocked and ready for use, only for a pre-defined time duration when said electronic sleeve (250) operated by a legitimate mobile device user is activating said at least one measured user's biometric sensors and said at least new sensor output data is being positively compared with said uniquee legitimate user pre-recorded registration procedure reference data, and said two sets of sensors' output data deviates from each other by less than a predetermined minimal threshold; and
wherein said mobile personal electronic device (200) further comprising a touch screen display unit (208) for display of data to the user and indicating said device status and for the user's interaction with data content of said mobile electronic device (200) communicating with said user remote work enterprise IT resources.

3. The integrated mobile personal electronic device (200) according to claim 1,
wherein at least one of said at least one biometric sensors is a life signs detector (215), said life signs detector (215) being configured to measure and record at least one of said user's life sign parameters to indicate it is a real live legitimate user.

4. The integrated mobile personal electronic device (200) of claim 1,
wherein said at least two measuring biological sensors are selected from the sensors group including at least: a three dimensional device air-gesture linear acceleration based measuring sensor (228), a three dimensional mobile device air-gesture angular movement tilt measuring sensor (230); a face recognition imaging sensor (227), a palm pattern and morphology and palm veins IR imaged veins networks combined measuring and analysis IR/visible imaging sensor (227), user's voice analysis based on a voice pickup microphone sensor (218) and at least one user's life signs indicating physiological parameters measuring sensor.

5. The integrated mobile personal electronic device (200) of claim 2,
wherein the digital output of one of said biometric sensors user's biological parameter measurement results and said second measured at least one additional biometric sensor output results, are fused together by using a learning and adaptable dynamically weighted factor fusion algorithm, done between said two sensors measured output, made in order to enable improved and precise analysis; and
wherein identification of the unique legitimate user exact typical personal characteristics under said algorithm is creating a highly reliable user's authentication mechanism to best decide if to authenticate the present interacting user, while comparing to a similar reference pre-recorded fused set of said two kinds of sampled user's biometric sensors, if to activate said internal sleeve operation for enabling user's access through said secured device with said user work remote enterprise IT resources, or to enable the internal operation of one or more user work related interaction functions with said user adapted mobile electronic device.

6. The integrated mobile personal electronic device (200) of claim 2,
wherein said mobile device (240) further comprises a biometric data processing module (250) for processing the output of said first and a second biometric sensors; and wherein said mobile device (240) further comprising a database management software module (260) to manage the user work enterprise records stored in said mobile device sleeve solid state large capacity secured memory (216), said work related data records are database managed to enable said device user quick and easy filing and retrieval of specific work enterprise data records files.

7. The integrated mobile personal electronic device (200) of claim 2, further comprising;
a dedicated encryption module within said electronic sleeve (250), said encryption module resides within said sleeve CPU (207) secured zone and is used to encrypt and decrypt said data content of said user work enterprise data records stored encrypted in said mobile device sleeve (250); and
wherein the encrypted data of said at least one biometric sensors pre-recorded registration procedure reference generated data is being recorded and stored for further authentications as the biometric sensors registered user authentication reference data.

8. The integrated mobile personal electronic device (200) according to claim 3,
wherein said at least one of said user's life sign parameters is measured by one or more sensors selected from the group of life sign indicators and sensors (215), including; a heart bit rate measurement indicator, a blood O₂ saturation level indicator, a body heat measurement indicator, an electro-dermal activity indicator, a body respiration indicator and a physical or emotional stress coercion sensing measurement indicator.

9. The integrated mobile personal electronic device (200) according to claim 8,
wherein, whenever any of its at least one life sign indicators (215) detects a pre-defined critical level, said mobile electronic device (200) is configured to initiate an emergency call to at least one entity selected from a group of the user's work enterprise memory (216) stored emergency management units, or remote emergency medical centers and then said mobile electronic device (200) sending a group of data files containing emergency case management information associated with the user, including the personal identification data file of the user, personal emergency situation related medical data file of said user, the recently measured set of life sign parameters of said mobile electronic device (200) user and the location of the user.

10. A method for employee user remotely inteacting, managing and updating data and associated documentation exchange for enabling an individual user to remotely work with the resources of the employer, said user having an integrated mobile personal electronic device (200) uniquely associated with said individual user, each of said integrated personal mobile electronic devices comprising:
a mobile communication device (240) equipped with a touch screen for user's interaction and a cellular modem (204) to enable data communication over the cellular and internet networks equipped to receive and send user's data to and from the user employer enterpise IT management recources;
an electronic sleeve (250) configured to be attached to said mobile communication device (240) to create together with said communication device (240) a unified compact device, wherein said electronic sleeve (250) contains:
- a biometric sensors module (215) comprising at least one biometric set of sensors;
- a processing CPU module (207) in communication with said sensor module;
- an authentication unit (224) in communication with said CPU based processing module (207);
- an encryption module in communication with said processing module (207);
- a memory module (216) in communication with said processing module and said encryption module; and
- communication and data connection means (210) in communication with said mobile communication device(240),
the method **characterized by** comprising the steps of:
i. said electronic sleeve biometric sensor module (260) reading said at least one personal biological identification sensors output parameters of a user holding said mobile communication device;
ii. said electronic sleeve biometric sensor authentication module (224) comparing the generated personal biological identification parameters of the user holding the device with a pre-recorded set of personal biological identification parameters associated with a unique legitimate user stored in said electronic sleeve authentication unit (222); and
iii. if said authentication unit positively identifies said user, then allowing said user to get access to said user's data documentation and work files stored in said electronic sleeve memory module (216) and allowing user during a pre-defined time period to communicate and exchange files and data with the remote IT of the user's employer through said mobile electronic device (200) communication capabilities, and
wherein said at least one biometric sensors (260) continuously reads and analyzes at least one personal biological identification parameters associated with the registered user with the user holding the integrated personal electronic device; and
in the event that a change occurs in any one of the measured at least one personal biological identification parameters, denying user access to work related data files stored in said sleeve (250) and shutting down access to work related data stored in the internal secured memory (216) of said sleeve (250) and denying data exchange operational capability with the remote IT of the user's employer..

11. The method of claim 10, wherein at least one of at least two biometric sensors is a life signs detector, configured to measure and record at least one of a group of life sign indicators (215) including a heart pulse rate measurement indicator, a blood O₂ saturation level indicator, a body heat measurement indicator, an electro-dermal activity indicator, a body respiration indicator and a physical or emotional stress coercion indicator, the method further comprising the steps of:
a. initiating an emergency call to at least one emergency center wherein said center details and coomunication data are registered and stored in said mobile device electronic sleeve memory (216), whenever any of the user's measured life sign indicators detects a critical abnormal level; and
b. wherein said emergency call transmits a selected medical emergency related data file of medical and personal information associated with the user, including identification of the user, personal emergency medical data file of the user, including the measured set of life sign parameters of said user and the measred location of said user; and/or
wherein said integrated mobile personal electronic device (200) further comprises:
an emergency button, selected from the group comprising a software generated soft button and a hardware button, said button in communication with said processing module and said communication and data connection means, the method further comprising the steps of:
a. when said emergency button is activated, communication is initiated between said mobile personal device and at least one registered emergency mobile service or emergency center; and
b. said emergency communication transmitting a emergency data file with information associated with the user, including identification of the user, the updated personal emergency medical data file of said user, and location of said user.

12. A management system for supporting user's - employer enterprise interaction functions, said system comprising a plurality of remotely distributed employees with their owned identified users' controlled integrated mobile personal devices, each said personal device containing a secured enterprise user's work related management data module, each said integrated mobile personal device constructed of a combined mobile communication device (240) together with an attached mobile electronic sleeve device (250), said sleeve (250) functioning as a private user bio-authentication and enterprise secured data communication and related work records secure files storage and management platform, said system comprising:
a system gateway server operating as said system manager for managing and updating communication addressing ID data of said system plurality of remote work management employee users private mobile devices and for securely communication between each of said plurality of said remote work employees mobile devices with their employer enterprise IT resources;
a memory (216) sub-system connected to said system gateway server to store updated ID data of said mobile devices and any required associated user data of each of said plurality of said mobile devices users;
a plurality of personal mobile devices units (240), each of said mobile devices (240) being associated with a unique user, each unique ID data of said mobile devices being registered with said system gateway server and wherein the ID data file of each unique ID data of said mobile devices being stored in said memory (216) sub-system;
wherein said gateway server enables access and creates a communication link with the any of said system registered users through their said private mobile devices containing said user's work related management data and documentation files; and
wherein said access to any user's requested said device stored work related data and documentation files and two way data communication with said user remote employer enterprise IT data resources is only enabled after positive authentication of said unique user, and
wherein each of said plurality of said integrated personal mobile devices units comprises:
a mobile computerized communication device (240) such as a smartphone or a notepad having an internal communication modem (204) enabling data communication through the cellular networks and internet infrastructure and having a touch screen for user's interaction with said communication device; and
a mobile electronic sleeve device (250), said sleeve (250) functioning as a private user bio-authentication and enterprise related work records files secured storage and management platform physically attached and electronically interconnected with said communication device,
***characterized by*** said mobile electronic sleeve device (250) further comprising;
a sensor module (260) comprising a one or more of a plurality of biometric sensors for reading at least one personal biological identification parameters of the user holding the personal identification unit, said personal identification unit being uniquely identified with said user;
a processing module (207) in communication with said sensor module (260) for processing said personal biological identification parameters and for processing and managing the personal and secured data and documentation files associated with said user interactions with said work enterprise;
an authentication unit (224) in communication with the processing module (207) configured to receive and authenticate the identity of said user by comparing said user's personal biological identification parameters read by said sensor module (260) and processed by said processing module (207), with a pre-recorded set of personal biological identification parameters associated with the unique legitimate user stored in said authentication unit;
an encryption module in communication with said processing module (207) for said encryption plus compression and/or decompression plus decryption of said user's data files;
a memory (216) module in communication with said processing module and said encryption module for the storage and management of said user's work-related data and documentation files; and
communication and data connection means (210) in communication with said processing module for connecting said personal mobile device (240) units with said system gateway server and with said employer enterprise IT resources; and
wherein said at least one of biometric sensors (260) continuously reads and analyzes a plurality of personal biological identification parameters with the person holding the integrated personal electronic device, said identification parameters associated with registered user and in the event that a noticeable change occurs in any of said measured personal biological identification parameters, access to the enterprise's data files stored in the sleeve (250) is denied and the operation of said electronic sleeve device (250) is completely shut down while the operation of said mobile communication device (240) remains functional.

## Patentansprüche

1. Integriertes mobiles persönliches elektronisches Gerät (200) zum sicheren Kommunizieren, Verwalten und Aktualisieren von arbeitsbezogenen Aufgaben eines Benutzers und zum parallelen Unterstützen von privaten täglichen Abläufen des Benutzers, welches Folgendes umfasst:
ein mobiles Kommunikationsgerät (240), das mit einem Mobilfunkmodem (204) zum Ermöglichen von Datenkommunikation über Mobilfunk- und Internetnetzwerke ausgestattet ist, wobei das mobile Kommunikationsgerät (240) zum Empfangen und Senden von sowohl arbeitsbezogenen Daten eines Arbeitgeberunternehmens des Benutzers als auch privaten Daten aus mehreren Quellen konfiguriert ist;
**dadurch gekennzeichnet, dass** das integrierte mobile persönliche elektronische Gerät (200) Folgendes umfasst:
eine elektronische Hülle (250), die derart konfiguriert ist, dass sie an dem mobilen Kommunikationsgerät (240) angebracht werden kann, um zusammen mit dem Kommunikationsgerät (240) ein einheitliches Einzelgerät (200) zu bilden, wobei die Hülle (250) mindestens eine CPU (207), ein gesichertes Solid-State-Speichermodul mit großer Kapazität (216), das zum separaten Speichern und Verwalten der arbeitsbezogenen und persönlichen Daten des Benutzers ausgestattet ist, eine RAM-Einheit und mindestens ein biometrisches Sensormodul (215) umfasst;
wobei das biometrische Sensormodul (215) mindestens einen Messsensor für einen biometrischen Parameter umfasst, wobei jeder des mindestens einen Sensors einen unterschiedlichen biometrischen Parameter misst und erzeugt;
wobei die elektronische Hülle (250) ein Softwaremodul (260) enthält, das einen Satz von Funktionen zum Ermöglichen von gesichertem/r Zugriff und Kommunikation zwischen der Hülle (250) und mehreren Betriebsfunktionen der arbeitsbezogenen Aufgaben des Benutzers, die sich auf entfernten IT-Ressourcen des Arbeitgeberunternehmens des Benutzers befinden, aktiviert; wobei die Hülle (250) gesicherte arbeitsbezogene Daten des Unternehmens speichert und die Hülle (250) biometrische Registrierungsdaten speichert, die eindeutig dem eindeutigen legitimen Benutzer zugeordnet sind,
wobei, als Reaktion darauf, dass das biometrische Sensormodul (215) eine Signalsequenz misst und abtastet, gefolgt davon, dass die CPU der Hülle (207) eine positive Authentifizierung des eindeutigen legitimen Benutzers empfängt, die elektronische Hülle (250) über das Mobilfunkmodem des Kommunikationsgerätes (204) einen gesicherten direkten Zweiwege-Datenkommunikationskanal (210) zwischen dem Benutzer und den entfernten IT-Ressourcen des Arbeitsunternehmens des Benutzers aktiviert und erstellt, und
wobei der mindestens eine der biometrischen Sensoren (215) kontinuierlich mehrere persönliche biologische Identifikationsparameter der Person, die das integrierte persönliche elektronische Gerät hält, liest und analysiert, wobei die Identifikationsparameter einem registrierten Benutzer zugeordnet sind, und wobei, falls eine merkliche Veränderung in jeglichem der gemessenen persönlichen biologischen Identifikationsparameter auftritt, ein Zugriff auf die Datendateien des Unternehmens, die in der Hülle (250) gespeichert sind, verweigert wird und der Betrieb der elektronischen Hülle (250) komplett abgeschaltet wird, während der Betrieb des mobilen Kommunikationsgerätes (240) weiterhin funktioniert.

2. Integriertes mobiles persönliches elektronisches Gerät (200) nach Anspruch 1, wobei:
die Aktivierung und der Betrieb des Satzes von arbeitsbezogenen Aufgaben des Benutzers ausgeführt werden, wenn mindestens zwei biometrische Parameter durch die CPU der Hülle (207) mit biometrischen Registrierungsdaten, die dem eindeutigen legitimen Benutzer zugeordnet sind, die im Speicher der Hülle (216) gespeichert sind, verglichen werden;
wobei die voraufgezeichneten abgetasteten biometrischen Registrierungsdaten aufgezeichnet werden, wenn der eindeutige legitime Benutzer einen erstmaligen Supervisor-gesteuerten Registrierungsvorgang auf dem mobilen elektronischen Gerät (200) ausführt, dadurch ermöglicht, dass die Ausgabe des mindestens einen biometrischen Sensors aufgezeichnet und zur weiteren Systemeintrittsauthentifizierung des Benutzers sicher im Speicher der elektronischen Hülle (216) gespeichert wird;
wobei der zugehörige Satz von Arbeitsaufgaben des Benutzers positiv aktiviert wird und der gesicherte Speicher der Hülle (216) entsperrt wird und nur für einen vordefinierten Zeitraum zur Verwendung bereitsteht, wenn die elektronische Hülle (250), die durch einen legitimen Benutzer des mobilen Gerätes bedient wird, den mindestens einen biometrischen Sensor zum Messen des Benutzers aktiviert und die neuen Ausgabedaten des mindestens einen Sensors positiv mit den voraufgezeichneten Referenzdaten aus dem Registrierungsvorgang des eindeutigen legitimen Benutzers verglichen werden und die beiden Sätze der Sensorausgabedaten um weniger als eine vorbestimmte minimale Schwelle voneinander abweichen; und
wobei das mobile persönliche elektronische Gerät (200) ferner eine Touchscreen-Anzeigeeinheit (208) zum Anzeigen von Daten für den Benutzer und Angeben des Gerätestatus und für die Interaktion des Benutzers mit Dateninhalt des mobilen elektronischen Gerätes (200), das mit den entfernten IT-Ressourcen des Arbeitsunternehmens des Benutzers kommuniziert, umfasst.

3. Integriertes mobiles persönliches elektronisches Gerät (200) nach Anspruch 1, wobei mindestens einer des mindestens einen biometrischen Sensors ein Lebenszeichendetektor (215) ist, wobei der Lebenszeichendetektor (215) zum Messen und Aufzeichnen von mindestens einem der Lebenszeichenparameter des Benutzers konfiguriert ist, um anzugeben, dass es sich um einen wirklichen legitimen Benutzer handelt.

4. Integriertes mobiles persönliches elektronisches Gerät (200) nach Anspruch 1,
wobei die mindestens zwei biologischen Messsensoren ausgewählt sind aus der Gruppe von Sensoren, die mindestens die Folgenden beinhaltet: einen dreidimensionalen, auf linearer Beschleunigung basierenden Luftgesten-Messsensor (228), einen dreidimensionalen Luftgesten-Winkelbewegungsneigungs-Messsensor eines Mobilgerätes (230), einen Gesichtserkennungs-Bildgebungssensor (227), einen kombinierten Mess- und Analysesensor für IR-/sichtbare Bildgebung auf der Grundlage von IR-abgebildeten Venengeflechten zur Handflächenmuster-, Handflächenmorphologie- und Handflächenvenen-Erkennung (227), einen Sprachaufnahme-Mikrofonsensor zur Sprachanalyse des Benutzers (218) und mindestens einen Messsensor für physiologische Parameter zum Angeben der Lebenszeichen eines Benutzers.

5. Integriertes mobiles persönliches elektronisches Gerät (200) nach Anspruch 2,
wobei die digitale Ausgabe der Messergebnisse der biologischen Parameter des Benutzers von einem der biometrischen Sensoren und die zweite Ausgabe der Messergebnisse von mindestens einem weiteren biometrischen Sensor durch Verwendung eines lernenden und anpassbaren dynamisch gewichteten Faktorfusionsalgorithmus miteinander verschmolzen werden, was zwischen der gemessenen Ausgabe der beiden Sensoren geschieht, um eine verbesserte und präzise Analyse zu ermöglichen; und
wobei die Identifizierung der exakten typischen persönlichen Eigenschaften des eindeutigen legitimen Benutzers gemäß dem Algorithmus einen hochzuverlässigen Mechanismus zur Authentifizierung eines Benutzers erzeugt, um bestmöglich zu entscheiden, ob der gegenwärtig interagierende Benutzer authentifiziert werden soll, während mit einem ähnlichen voraufgezeichneten verschmolzenen Referenzsatz dieser beiden Arten biometrischer Sensoren zum Abtasten des Benutzers verglichen wird, ob der Betrieb der internen Hülle zum Ermöglichen des Benutzerzugriffs auf die entfernten IT-Ressourcen des Arbeitsunternehmens des Benutzers über das gesicherte Gerät aktiviert werden soll oder der interne Betrieb von einer oder mehreren arbeitsbezogenen Interaktionsfunktionen des Benutzers mit dem für den Benutzer angepassten mobilen elektronischen Gerät ermöglicht werden soll.

6. Integriertes mobiles persönliches elektronisches Gerät (200) nach Anspruch 2, wobei das mobile Gerät (240) ferner ein Verarbeitungsmodul für biometrische Daten (250) zum Verarbeiten der Ausgabe des ersten und eines zweiten biometrischen Sensors umfasst; und wobei das mobile Gerät (240) ferner ein Datenbankmanagement-Softwaremodul (260) zum Verwalten der Aufzeichnungen des Arbeitsunternehmens des Benutzers, die im gesicherten Solid-State-Speicher mit großer Kapazität der Hülle des mobilen Gerätes (216) gespeichert sind, umfasst, wobei die arbeitsbezogenen Datenaufzeichnungen in einer Datenbank verwaltet werden, um dem Benutzer des Gerätes ein schnelles und einfaches Ablegen und Abrufen von spezifischen Datenaufzeichnungsdateien des Arbeitsunternehmens zu ermöglichen.

7. Integriertes mobiles persönliches elektronisches Gerät (200) nach Anspruch 2, welches ferner Folgendes umfasst:
ein dediziertes Verschlüsselungsmodul innerhalb der elektronischen Hülle (250), wobei sich das Verschlüsselungsmodul innerhalb der gesicherten Zone der CPU der Hülle (207) befindet und zum Verschlüsseln und Entschlüsseln des Dateninhaltes der Datenaufzeichnungen des Arbeitsunternehmens des Benutzers, die verschlüsselt in der Hülle des mobilen Gerätes (250) gespeichert sind, verwendet wird; und
wobei die verschlüsselten Daten der durch den mindestens einen biometrischen Sensor während des Registrierungsvorgangs erzeugten voraufgezeichneten Referenzdaten für weitere Authentifizierungen als die biometrischen Sensor-Referenzdaten zur Authentifizierung eines registrierten Benutzers aufgezeichnet und gespeichert werden.

8. Integriertes mobiles persönliches elektronisches Gerät (200) nach Anspruch 3,
wobei der mindestens eine der Lebenszeichenparameter des Benutzers durch einen oder mehrere Sensoren ausgewählt aus der Gruppe von Lebenszeichenindikatoren und - sensoren (215) gemessen wird, zu welchen Folgende zählen: ein Herzfrequenz-Messindikator, ein Blutsauerstoffsättigungsniveau-Indikator, ein Körperwärme-Messindikator, ein Indikator für die elektrodermale Aktivität, ein Körperatmungsindikator und ein Messindikator zur Erfassung von physischem oder emotionalem Stress.

9. Integriertes mobiles persönliches elektronisches Gerät (200) nach Anspruch 8, wobei das mobile elektronische Gerät (200), immer wenn jeglicher seines mindestens einen Lebenszeichenindikators (215) ein vordefiniertes kritisches Level erkennt, konfiguriert ist zum Initiieren eines Notfallanrufs an mindestens eine Einrichtung ausgewählt aus einer Gruppe von Notfallmanagementeinheiten oder entfernten medizinischen Notfallzentren, die im Speicher des Arbeitsunternehmens des Benutzers (216) gespeichert sind, und das mobile elektronische Gerät (200) dann konfiguriert ist zum Senden einer Gruppe von Datendateien, die Notfallmanagementinformationen im Zusammenhang mit dem Benutzer enthalten, einschließlich der persönlichen Identifikationsdatendatei des Benutzers, der persönlichen Notfallsituations-bezogenen medizinischen Datendatei des Benutzers, des kürzlich gemessenen Satzes von Lebenszeichenparametern des Benutzers des mobilen elektronischen Gerätes (200) und des Standortes des Benutzers.

10. Verfahren für einen Arbeitnehmerbenutzer, der entfernt mit Daten und einem assoziierten Dokumentationsaustausch interagiert, diese/n verwaltet und aktualisiert, um es einem individuellen Benutzer zu ermöglichen, entfernt mit den Ressourcen des Arbeitgebers zu arbeiten, wobei der Benutzer ein integriertes mobiles persönliches elektronisches Gerät (200) verwendet, das eindeutig dem individuellen Benutzer zugeordnet ist, wobei jedes der integrierten persönlichen mobilen elektronischen Geräte Folgendes umfasst:
ein mobiles Kommunikationsgerät (240), das mit einem Touchscreen für die Benutzerinteraktion und einem Mobilfunkmodem (204) zum Ermöglichen von Datenkommunikation über Mobilfunk- und Internetnetzwerke ausgestattet ist, welches zum Empfangen und Senden von Benutzerdaten von den und an die IT-Management-Ressourcen eines Arbeitgeberunternehmens des Benutzers ausgestattet ist;
eine elektronische Hülle (250), die derart konfiguriert ist, dass sie an dem mobilen Kommunikationsgerät (240) angebracht werden kann, um zusammen mit dem Kommunikationsgerät (240) ein einheitliches Kompaktgerät zu bilden, wobei die elektronische Hülle (250) Folgendes enthält:
- ein biometrisches Sensormodul (215), welches mindestens einen Satz biometrischer Sensoren umfasst;
- ein CPU-Verarbeitungsmodul (207) in Kommunikation mit dem Sensormodul;
- eine Authentifizierungseinheit (224) in Kommunikation mit dem CPU-basierten Verarbeitungsmodul (207);
- ein Verschlüsselungsmodul in Kommunikation mit dem Verarbeitungsmodul (207);
- ein Speichermodul (216) in Kommunikation mit dem Verarbeitungsmodul und dem Verschlüsselungsmodul; und
- Kommunikations- und Datenverbindungsmittel (210) in Kommunikation mit dem mobilen Kommunikationsgerät (240),
wobei das Verfahren **dadurch gekennzeichnet ist, dass** es folgende Schritte umfasst:
i. das biometrische Sensormodul der elektronischen Hülle (260) liest den mindestens einen Ausgabeparameter der persönlichen biologischen Identifikationssensoren von einem Benutzer, der das mobile Kommunikationsgerät hält;
ii. das Authentifizierungsmodul des biometrischen Sensors der elektronischen Hülle (224) vergleicht den erzeugten persönlichen biologischen Identifikationsparameter des Benutzers, der das Gerät hält, mit einem voraufgezeichneten Satz von persönlichen biologischen Identifikationsparametern im Zusammenhang mit einem eindeutigen legitimen Benutzer, die in der Authentifizierungseinheit der elektronischen Hülle (222) gespeichert sind; und
iii. wenn die Authentifizierungseinheit den Benutzer positiv identifiziert, Gestatten, dass der Benutzer Zugriff auf die Datendokumentation und Arbeitsdateien des Benutzers, die im Speichermodul der elektronischen Hülle (216) gespeichert sind, erhält, und Gestatten, dass der Benutzer während eines vordefinierten Zeitraums über die Kommunikationsfähigkeiten des mobilen elektronischen Gerätes (200) Dateien und Daten mit der entfernten IT des Arbeitgebers des Benutzers kommuniziert und austauscht, und
wobei der mindestens eine biometrische Sensor (260) kontinuierlich mindestens einen persönlichen biologischen Identifikationsparameter im Zusammenhang mit dem registrierten Benutzer für den Benutzer, der das integrierte persönliche elektronische Gerät hält, liest und analysiert; und
falls in jeglichem einen des gemessenen mindestens einen persönlichen biologischen Identifikationsparameters eine Veränderung auftritt, Verweigern des Benutzerzugriffs auf arbeitsbezogene Datendateien, die in der Hülle (250) gespeichert sind, und Abschalten des Zugriffs auf arbeitsbezogene Daten, die im internen gesicherten Speicher (216) der Hülle (250) gespeichert sind, und Verweigern einer Datenaustausch-Funktionsfähigkeit mit der entfernten IT des Arbeitgebers des Benutzers.

11. Verfahren nach Anspruch 10, wobei mindestens einer von mindestens zwei biometrischen Sensoren ein Lebenszeichendetektor ist, der konfiguriert ist zum Messen und Aufzeichnen von mindestens einem aus einer Gruppe von Lebenszeichenindikatoren (215), einschließlich eines Herz- und Pulsfrequenz-Messindikators, eines Blutsauerstoffsättigungsniveau-Indikators, eines Körperwärme-Messindikators, eines Indikators für elektrodermale Aktivität, eines Körperatmungsindikators und eines Indikators zur Erfassung von physischem oder emotionalem Stress, wobei das Verfahren ferner Folgende Schritte umfasst:
a. Initiieren eines Notrufs an mindestens ein Notfallzentrum, wobei die Details und Kommunikationsdaten des Zentrums im Speicher der elektronischen Hülle des mobilen Gerätes (216) registriert und gespeichert sind, immer wenn jeglicher der gemessenen Lebenszeichenindikatoren des Benutzers ein kritisches abnormales Level erkennt; und
b. wobei der Notruf eine ausgewählte medizinische Notfall-bezogene Datendatei medizinischer und persönlicher Informationen im Zusammenhang mit dem Benutzer übermittelt, einschließlich einer Identifikation des Benutzers, einer persönlichen medizinischen Notfall-Datendatei des Benutzers, einschließlich des gemessenen Satzes von Lebenszeichenparametern des Benutzers und des gemessenen Standortes des Benutzers; und/oder
wobei das integrierte mobile persönliche elektronische Gerät (200) ferner Folgendes umfasst:
eine Notfalltaste, ausgewählt aus der Gruppe umfassend eine Software-erzeugte Softtaste und eine Hardwaretaste, wobei die Taste in Kommunikation mit dem Verarbeitungsmodul und den Kommunikations- und Datenverbindungsmitteln steht, wobei das Verfahren ferner Folgende Schritte umfasst:
a. wenn die Notfalltaste aktiviert wird, wird eine Kommunikation zwischen dem mobilen persönlichen Gerät und mindestens einem registrierten Notfallmobildienst oder Notfallzentrum initiiert; und
b. die Notfallkommunikation übermittelt eine Notfalldatendatei mit Informationen im Zusammenhang mit dem Benutzer, einschließlich einer Identifikation des Benutzers, der aktualisierten persönlichen medizinischen Notfalldatendatei des Benutzers und eines Standortes des Benutzers.

12. Managementsystem zur Unterstützung von Interaktionsfunktionen zwischen einem Benutzer und seinem Arbeitgeberunternehmen, wobei das System mehrere entfernte verteilte Arbeitnehmer mit ihren eigenen gesteuerten integrierten mobilen persönlichen Geräten als identifizierte Benutzer umfasst, wobei jedes persönliche Gerät ein gesichertes arbeitsbezogenes Unternehmensdaten-Managementmodul des Benutzers enthält, wobei jedes solches integriertes mobiles persönliches Gerät aus einem kombinierten mobilen Kommunikationsgerät (240) zusammen mit einer angebrachten elektronischen Hülle des mobilen Gerätes (250) besteht, wobei die Hülle (250) als eine Privatnutzer-Bioauthentifizierungsplattform und eine Speicher- und Managementplattform für gesicherte Unternehmensdatenkommunikation und zugehörige gesicherte Arbeitsaufzeichnungsdateien dient, wobei das System Folgendes umfasst:
einen System-Gateway-Server, der als der Systemmanager zum Verwalten und Aktualisieren von Kommunikationsadressierungs-ID-Daten des Systems aus mehreren entfernten privaten mobilen Geräten der Arbeitnehmerbenutzer für das Arbeitsmanagement und für die sichere Kommunikation zwischen jedem der mehreren entfernten mobilen Geräte der Arbeitnehmer mit den IT-Ressourcen ihres Arbeitgeberunternehmens dient;
ein Speicheruntersystem (216), das mit dem System-Gateway-Server verbunden ist, zum Speichern aktualisierter ID-Daten der mobilen Geräte und jeglicher erforderlicher assoziierter Benutzerdaten von jedem der mehreren Mobilgerätenutzer;
mehrere persönliche mobile Geräteeinheiten (240), wobei jedes der mobilen Geräte (240) einem eindeutigen Benutzer zugeordnet ist, wobei jeweilige eindeutige ID-Daten der mobilen Geräte bei dem System-Gateway-Server registriert sind und wobei die ID-Datendatei der jeweiligen eindeutigen ID-Daten der mobilen Geräte in dem Speicheruntersystem (216) gespeichert sind;
wobei der Gateway-Server den Zugriff für jeglichen der im System registrierten Benutzer über sein privates mobiles Gerät, das die arbeitsbezogenen Managementdaten und Dokumentationsdateien des Benutzers enthält, ermöglicht und eine entsprechende Kommunikationsverknüpfung herstellt; und
wobei der Zugriff eines Benutzers auf die im Gerät gespeicherten arbeitsbezogenen Daten- und Dokumentationsdateien und eine Zweiwege-Datenkommunikation des Benutzers mit den entfernten IT-Datenressourcen des Arbeitgeberunternehmens nur nach einer positiven Authentifizierung des eindeutigen Benutzers freigegeben wird, und
wobei jede der mehreren integrierten persönlichen mobilen Geräteeinheiten Folgendes umfasst:
ein mobiles computerisiertes Kommunikationsgerät (240), wie z.B. ein Smartphone oder ein Notepad, mit einem internen Kommunikationsmodem (204), welches Datenkommunikation über die Mobilfunknetzwerke und die Internetinfrastruktur ermöglicht, und mit einem Touchscreen für die Interaktion des Benutzers mit dem Kommunikationsgerät; und
eine elektronische Hülle des mobilen Gerätes (250), wobei die Hülle (250) als eine Privatnutzer-Bioauthentifizierungsplattform und eine gesicherte Speicher- und Managementplattform für unternehmensbezogene Arbeitsaufzeichnungsdateien dient, die physisch an dem Kommunikationsgerät angebracht und elektronisch damit verbunden ist, **dadurch gekennzeichnet, dass** die elektronische Hülle des mobilen Gerätes (250) ferner Folgendes umfasst:
ein Sensormodul (260), das einen oder mehrere von mehreren biometrischen Sensoren zum Lesen von mindestens einem persönlichen biologischen Identifikationsparameter des Benutzers, der die persönliche Identifikationseinheit hält, umfasst, wobei die persönliche Identifikationseinheit eindeutig mit dem Benutzer identifiziert wird;
ein Verarbeitungsmodul (207) in Kommunikation mit dem Sensormodul (260) zum Verarbeiten der persönlichen biologischen Identifikationsparameter und zum Verarbeiten und Verwalten der persönlichen und gesicherten Daten- und Dokumentationsdateien im Zusammenhang mit den Interaktionen des Benutzers mit dem Arbeitsunternehmen;
eine Authentifizierungseinheit (224) in Kommunikation mit dem Verarbeitungsmodul (207), die konfiguriert ist zum Empfangen und Authentifizieren der Identität des Benutzers durch das Vergleichen der persönlichen biologischen Identifikationsparameter des Benutzers, die durch das Sensormodul (260) gelesen und durch das Verarbeitungsmodul (207) verarbeitet werden, mit einem voraufgezeichneten Satz von persönlichen biologischen Identifikationsparametern im Zusammenhang mit dem eindeutigen legitimen Benutzer, die in der Authentifizierungseinheit gespeichert sind;
ein Verschlüsselungsmodul in Kommunikation mit dem Verarbeitungsmodul (207) zum Verschlüsseln sowie Komprimieren und/oder Dekomprimieren sowie Entschlüsseln der Datendateien des Benutzers;
ein Speichermodul (216) in Kommunikation mit dem Verarbeitungsmodul und dem Verschlüsselungsmodul zum Speichern und Verwalten der arbeitsbezogenen Daten- und Dokumentationsdateien des Benutzers; und
Kommunikations- und Datenverbindungsmittel (210) in Kommunikation mit dem Verarbeitungsmodul zum Verbinden der persönlichen mobilen Geräteeinheiten (240) mit dem System-Gateway-Server und mit den IT-Ressourcen des Arbeitgeberunternehmens; und
wobei der mindestens eine der biometrischen Sensoren (260) kontinuierlich mehrere persönliche biologische Identifikationsparameter der Person, die das integrierte persönliche elektronische Gerät hält, liest und analysiert, wobei die Identifikationsparameter einem registrierten Benutzer zugeordnet sind, und falls eine merkliche Veränderung in jeglichem der gemessenen persönlichen biologischen Identifikationsparameter auftritt, wird der Zugriff auf die Datendateien des Unternehmens, die in der Hülle (250) gespeichert sind, verweigert und der Betrieb der elektronischen Hülle des Gerätes (250) wird komplett abgeschaltet, während der Betrieb des mobilen Kommunikationsgerätes (240) weiterhin funktioniert.

## Revendications

1. Dispositif électronique personnel mobile intégré (200) pour communiquer, gérer et mettre à jour en toute sécurité les tâches liées au travail de l'utilisateur et en parallèle pour soutenir les opérations quotidiennes de la vie privée des utilisateurs, comprenant:
un dispositif de communication mobile (240) équipé d'un modem cellulaire (204) pour permettre la communication de données sur des réseaux cellulaires et Internet, ledit dispositif de communication mobile (240) étant configuré pour recevoir et envoyer à la fois les données professionnelles de l'entreprise de l'employeur de l'utilisateur ainsi que des données privées avec une pluralité de sources;
**caractérisé par** ledit dispositif électronique personnel mobile intégré (200) comprenant un manchon électronique (250) configuré pour être rattaché audit dispositif de communication mobile (240) pour créer conjointement avec ledit dispositif de communication (240) un dispositif unique unifié (200), ledit manchon (250) comprenant au moins une unité centrale (207), un module de mémoire sécurisé de grande capacité à semi-conducteurs (216) équipé pour stocker et gérer séparément le travail et les données personnelles dudit utilisateur, une unité de RAM et au moins un module de capteurs biométriques (215) ;
dans lequel ledit module de capteurs biométriques (215) comprend au moins un capteur de paramètres de mesure biométrique, chacun desdits au moins un capteurs mesurant et générant un paramètre biométrique différent;
dans lequel ledit manchon électronique (250) contient un module logiciel (260) qui active un ensemble de fonctions pour permettre un accès et une communication sécurisés entre ledit manchon (250) avec une pluralité de fonctions opérationnelles desdites tâches liées au travail de l'utilisateur résidant au niveau desdites ressources informatiques de l'entreprise de l'employeur distant de l'utilisateur;
ledit manchon (250) mémorisant des données sécurisées liées au travail d'entreprise et ledit manchon (250) mémorisant des données biométriques d'enregistrement associées de manière unique à l'utilisateur légitime unique,
dans lequel en réponse audit module de capteurs biométriques (215) une séquence de signaux mesurée et échantillonnée, suivie dudit manchon CPU (207) recevant une authentification positive de l'utilisateur légitime unique, ledit manchon électronique (250) s'active et crée un canal de communication de données sécurisé bidirectionnel direct (210) à travers ledit modem cellulaire de dispositif de communication (204) entre ledit utilisateur et lesdites ressources informatiques d'entreprise de travail à distance d'utilisateur, et
dans lequel ledit au moins un des capteurs biométriques (215) lit et analyse en continu une pluralité de paramètres d'identification biologique personnels avec la personne qui détient le dispositif électronique personnel intégré, lesdits paramètres d'identification associés à l'utilisateur enregistré et dans le cas où un changement notable se produit dans un quelconque desdits paramètres d'identification biologique personnels mesurés, l'accès aux fichiers de données de l'entreprise mémorisés dans le manchon (250) est refusé et le fonctionnement dudit dispositif de manchon électronique (250) est complètement arrêté tandis que le fonctionnement dudit dispositif de communication mobile (240) reste fonctionnel.

2. Dispositif électronique personnel mobile intégré (200) selon la revendication 1, dans lequel:
ledit ensemble d'activation et d'exécution de tâches liées au travail de l'utilisateur est exécuté lorsqu'au moins deux paramètres biométriques sont comparés par ladite CPU de manchon (207) aux données biométriques d'enregistrement associées à l'utilisateur légitime unique mémorisé sur ladite mémoire de manchon (216);
dans lequel lesdites données biométriques d'enregistrement préenregistrées échantillonnées sont enregistrées sur l'utilisateur légitime unique exécutant sur ledit dispositif électronique mobile (200) une procédure d'enregistrement commandée par un superviseur initial, activée par ladite au moins une sortie de capteurs biométriques étant enregistrée et mémorisée en toute sécurité sur ladite mémoire de manchon électronique (216) en vue d'une autre authentification d'entrée du système de l'utilisateur;
dans lequel ledit ensemble associé de tâches de travail de l'utilisateur est activé positivement et ladite mémoire sécurisée par le manchon de dispositif (216) est déverrouillée et prête à être utilisée, uniquement pendant une durée prédéfinie lorsque ledit manchon électronique (250) actionné par un utilisateur légitime de dispositif mobile est l'activation desdits au moins un capteurs biométriques de l'utilisateur mesuré et desdites au moins nouvelles données de sortie de capteur est comparée positivement auxdites données de référence de procédure d'enregistrement préenregistrées d'utilisateur légitime unique, et les données de sortie desdits deux ensembles de données de sortie des capteurs s'écartent l'une de l'autre de moins de un seuil minimal prédéterminé; et
dans lequel ledit dispositif électronique personnel mobile (200) comprenant en outre une unité d'affichage à écran tactile (208) pour afficher des données à l'utilisateur et indiquer ledit état de dispositif et pour l'interaction de l'utilisateur avec le contenu de données dudit dispositif électronique mobile (200) communiquant avec lesdites ressources informatiques d'entreprise de travail à distance de l'utilisateur.

3. Dispositif électronique personnel mobile intégré (200) selon la revendication 1, dans lequel au moins un desdits au moins un capteurs biométriques est un détecteur de signes de vie (215), ledit détecteur de signes de vie (215) étant configuré pour mesurer et enregistrer au moins un des paramètres de signe de vie dudit utilisateur pour indiquer qu'il s'agit d'un utilisateur légitime réel.

4. Dispositif électronique personnel mobile intégré (200) selon la revendication 1, dans lequel lesdits au moins deux capteurs biologiques de mesure sont choisis dans le groupe de capteurs comprenant au moins: un capteur de mesure (228) basé sur une accélération linéaire de mouvement aérien, un dispositif mobile tridimensionnel de capteur (230) de mesure d'inclinaison de mouvement angulaire aérien; un capteur d'imagerie de reconnaissance faciale (227), un capteur d'imagerie IR/ visible d'analyse et de mesure combinés des réseaux de veines imagés par IR des veines de la paume et d'un motif et une morphologie de paume (227), un capteur d'analyse de la voix de l'utilisateur basé sur un capteur de microphone de prise de voix (218) et au moins un signe de vie d'un utilisateur indiquant les paramètres physiologiques du capteur de mesure.

5. Dispositif électronique personnel mobile intégré (200) selon la revendication 2, dans lequel la sortie numérique d'un desdits résultats de mesure de paramètres biologiques d'utilisateur de capteurs biométriques et desdits deuxièmes résultats mesurés d'au moins une sortie de capteur biométrique supplémentaire sont fusionnés en utilisant un algorithme d'apprentissage et de fusion de facteurs pondérés dynamiquement adaptable dynamiquement, effectué entre lesdits deux capteurs de sortie mesurés, réalisé afin de permettre une analyse améliorée et précise; et
dans lequel l'identification des caractéristiques personnelles typiques exactes de l'utilisateur légitime unique sous ledit algorithme crée un mécanisme d'authentification d'utilisateur hautement fiable pour décider au mieux s'il faut authentifier le présent utilisateur en interaction, tout en comparant à un ensemble fusionné préenregistré de référence similaire desdits deux types de capteurs biométriques de l'utilisateur échantillonné, s'il faut activer ledit fonctionnement de manchon interne pour permettre l'accès de l'utilisateur à travers ledit dispositif sécurisé avec lesdites ressources informatiques d'entreprise de travail à distance de l'utilisateur, ou pour permettre le fonctionnement interne d'une ou plusieurs fonctions d'interaction liées au travail de l'utilisateur avec ledit dispositif électronique mobile adapté à l'utilisateur.

6. Dispositif électronique personnel mobile intégré (200) selon la revendication 2, dans lequel ledit dispositif mobile (240) comprend en outre un module de traitement de données biométriques (250) pour traiter la sortie desdits premier et deuxième capteurs biométriques; et dans lequel ledit dispositif mobile (240) comprend en outre un module logiciel de gestion de base de données (260) pour gérer les enregistrements d'entreprise de travail de l'utilisateur mémorisés dans ladite mémoire sécurisée de grande capacité à semi-conducteurs de manchon de dispositif mobile (216), lesdits enregistrements de données liés au travail sont gérés par une base de données pour permettre audit utilisateur de dispositif de classer et de récupérer rapidement et facilement des fichiers d'enregistrements de données d'entreprise spécifiques.

7. Dispositif électronique personnel mobile intégré (200) selon la revendication 2, comprenant en outre :
un module de cryptage dédié à l'intérieur dudit manchon électronique (250), ledit module de cryptage réside dans ladite zone sécurisée de l'unité centrale du manchon (207) et est utilisé pour crypter et décrypter ledit contenu de données desdits enregistrements de données d'entreprise de travail de l'utilisateur mémorisés cryptés dans ledit manchon de dispositif mobile (250); et
dans lequel les données cryptées desdites données de référence de procédure d'enregistrement préenregistrées d'au moins un capteur biométrique sont enregistrées et mémorisées en vue d'autres authentifications en tant que données de référence d'authentification d'utilisateur enregistrées par les capteurs biométriques.

8. Dispositif électronique personnel mobile intégré (200) selon la revendication 3, dans lequel ledit au moins un desdits paramètres de signe de vie de l'utilisateur est mesuré par un ou plusieurs capteurs choisis dans le groupe d'indicateurs et de capteurs de signe de vie (215), incluant : un indicateur de mesure du débit binaire cardiaque, un indicateur de niveau de saturation du sang O₂, un indicateur de mesure de la chaleur corporelle, un indicateur d'activité électro-cutanée, un indicateur de respiration corporelle et un indicateur de mesure de détection de contrainte physique ou émotionnelle.

9. Dispositif électronique personnel mobile intégré (200) selon la revendication 8, dans lequel, chaque fois que l'un des au moins un indicateur de signe de vie (215) détecte un niveau critique prédéfini, ledit dispositif électronique mobile (200) est configuré pour déclencher un appel d'urgence vers au moins une entité sélectionnée dans un groupe d' unités de gestion d'urgence mémorisées de la mémoire d'entreprise de travail de l'utilisateur (216), ou des centres médicaux d'urgence à distance, puis ledit dispositif électronique mobile (200) envoie un groupe de fichiers de données contenant des informations de gestion de cas d'urgence associées à l'utilisateur, incluant le fichier de données d'identification personnelle de l'utilisateur, le fichier de données médicales relatives à la situation d'urgence personnelle dudit utilisateur, l'ensemble récemment mesuré de paramètres de signe de vie dudit utilisateur de dispositif électronique mobile (200) et l'emplacement de l'utilisateur.

10. Procédé permettant à un utilisateur employé d'interagir à distance, de gérer et de mettre à jour des données et l'échange de documentation associé pour permettre à un utilisateur individuel de travailler à distance avec les ressources de l'employeur, ledit utilisateur ayant un dispositif électronique personnel mobile intégré (200) associé de manière unique audit utilisateur individuel, chacun desdits dispositifs électroniques mobiles personnels intégrés comprenant:
un dispositif de communication mobile (240) équipé d'un écran tactile pour l'interaction de l'utilisateur et d'un modem cellulaire (204) pour permettre la communication de données sur les réseaux cellulaires et Internet équipés pour recevoir et envoyer les données de l'utilisateur vers et depuis les ressources de gestion informatique d'entreprise de l'employeur de l'utilisateur;
un manchon électronique (250) configuré pour être rattaché audit dispositif de communication mobile (240) pour créer conjointement avec ledit dispositif de communication (240) un dispositif compact unifié, dans lequel ledit manchon électronique (250) contient:
- un module de capteurs biométriques (215) comprenant au moins un ensemble biométrique de capteurs;
- un module CPU de traitement (207) en communication avec ledit module capteur;
- une unité d'authentification (224) en communication avec ledit module de traitement basé sur l'UC (207);
- un module de cryptage en communication avec ledit module de traitement (207);
- un module de mémoire (216) en communication avec ledit module de traitement et ledit module de cryptage; et
- des moyens de communication et de connexion de données (210) en communication avec ledit dispositif de communication mobile (240), le procédé étant **caractérisé en ce qu'**il comprend les étapes de :
i. lecture par ledit module de capteur biométrique à manchon électronique (260) desdits au moins un paramètre de sortie de capteurs d'identification biologique personnels d'un utilisateur détenant ledit dispositif de communication mobile;
ii. comparaison par ledit module d'authentification de capteur biométrique de manchon électronique (224) les paramètres d'identification biologique personnels générés de l'utilisateur détenant le dispositif avec un ensemble préenregistré de paramètres d'identification biologique personnels associés à un utilisateur légitime unique mémorisé dans ladite unité d'authentification de manchon électronique (222) ; et
iii. si ladite unité d'authentification identifie positivement ledit utilisateur, alors permission audit utilisateur d'accéder à la documentation de données de l'utilisateur et aux fichiers de travail mémorisés dans ledit module de mémoire de manchon électronique (216) et permettre à l'utilisateur pendant une période de temps prédéfinie de communiquer et d'échanger fichiers et données avec le service informatique distant de l'employeur de l'utilisateur via les capacités de communication dudit dispositif électronique mobile (200), et
dans lequel ledit au moins un capteur biométrique (260) lit et analyse en continu au moins un paramètre d'identification biologique personnel associé à l'utilisateur enregistré avec l'utilisateur détenant le dispositif électronique personnel intégré; et
dans le cas où un changement se produit dans un quelconque des au moins un paramètres d'identification biologique personnels mesurés, refuser l'accès de l'utilisateur aux fichiers de données liés au travail mémorisés dans ledit manchon (250) et fermer l'accès aux données liées au travail mémorisées dans la mémoire sécurisée interne (216) dudit manchon (250) et refuser la capacité opérationnelle d'échange de données avec le service informatique distant de l'employeur de l'utilisateur.

11. Procédé selon la revendication 10, dans lequel au moins un d'au moins deux capteurs biométriques est un détecteur de signes de vie, configuré pour mesurer et enregistrer au moins un d'un groupe d'indicateurs de signes de vie (215) comprenant un indicateur de mesure de la fréquence cardiaque, un indicateur de niveau de saturation du sang O₂, un indicateur de mesure de la chaleur corporelle, un indicateur d'activité électrodermique, un indicateur de respiration corporelle et un indicateur de contrainte physique ou émotionnelle, le procédé comprenant en outre les étapes de :
a. lancement d'un appel d'urgence vers au moins un centre d'urgence dans lequel lesdits détails du centre et les données de communication sont enregistrés et mémorisés dans ladite mémoire de manchon électronique de dispositif mobile (216), chaque fois qu'un quelconque des indicateurs de signe de vie mesurés de l'utilisateur détecte un niveau anormal critique; et
b. dans lequel ledit appel d'urgence transmet un fichier de données sélectionné lié à une urgence médicale d'informations médicales et personnelles associées à l'utilisateur, comprenant l'identification de l'utilisateur, un fichier de données médicales d'urgence personnelles de l'utilisateur, comprenant l'ensemble mesuré de paramètres de signe de vie dudit utilisateur et l'emplacement mesuré dudit utilisateur; et/ou
dans lequel ledit dispositif électronique personnel mobile intégré (200) comprend en outre:
un bouton d'urgence, sélectionné dans le groupe comprenant un bouton logiciel généré par logiciel et un bouton matériel, ledit bouton en communication avec ledit module de traitement et lesdits moyens de communication et de connexion de données, le procédé comprenant en outre les étapes de:
a. lorsque ledit bouton d'urgence est activé, une communication est lancée entre ledit dispositif personnel mobile et au moins un service mobile d'urgence ou un centre d'urgence enregistré; et
b. transmission par ladite communication d'urgence d'un fichier de données d'urgence avec des informations associées à l'utilisateur, incluant l'identification de l'utilisateur, le fichier de données médicales d'urgence personnelles mis à jour dudit utilisateur et l'emplacement dudit utilisateur.

12. Système de gestion pour prendre en charge les fonctions d'interaction d'entreprise employeur de l'utilisateur, ledit système comprenant une pluralité d'employés distribués à distance avec leurs propres dispositifs personnels mobiles intégrés contrôlés par les utilisateurs identifiés, chacun desdits dispositifs personnels contenant un module de données de gestion lié au travail d'un utilisateur d'entreprise sécurisé, chacun desdits dispositifs personnels mobiles intégrés étant constitués d'un dispositif de communication mobile combiné (240) avec un dispositif de manchon électronique mobile rattaché (250), ledit manchon (250) fonctionnant comme une bio-authentification d'utilisateur privé et une communication de données sécurisée par l'entreprise et une plateforme de mémorisation et de gestion de fichiers sécurisée des enregistrements de travail associés, ledit système comprenant:
un serveur de passerelle de système fonctionnant comme ledit gestionnaire de système pour gérer et mettre à jour les données d'identification d'adressage de communication de ladite pluralité de systèmes de dispositifs mobiles privés d'utilisateurs de gestion de travail à distance des employés et pour une communication sécurisée entre chacun de ladite pluralité desdits dispositifs mobiles d'employés de travail à distance avec leurs ressources informatiques d'entreprise employeur;
un sous-système de mémoire (216) connecté audit serveur de passerelle de système pour mémoriser des données d'identification mises à jour desdits dispositifs mobiles et toutes les données d'utilisateur associées requises de chacun de ladite pluralité desdits utilisateurs de dispositifs mobiles ;
une pluralité d'unités de dispositifs mobiles personnels (240), chacun desdits dispositifs mobiles (240) étant associé à un utilisateur unique, chaque donnée d'identifiant unique desdits dispositifs mobiles étant enregistrée auprès dudit serveur de passerelle de système et dans lequel le fichier de données d'identifiant de chaque donnée d'identifiant unique desdits dispositifs mobiles étant mémorisé dans ledit sous-système de mémoire (216);
dans lequel ledit serveur de passerelle permet l'accès et crée un lien de communication avec un quelconque desdits utilisateurs enregistrés dans le système via leurs dits dispositifs mobiles privés contenant les données de gestion et les fichiers de documentation liés au travail de l'utilisateur; et
dans lequel ledit accès aux fichiers de données et de documentation liés au travail mémorisés sur le dispositif demandé par tout utilisateur et la communication de données bidirectionnelle avec lesdites ressources de données informatiques d'entreprise de l'employeur à distance de l'utilisateur n'est activé qu'après une authentification positive dudit utilisateur unique, et
dans lequel chacune de ladite pluralité desdites unités intégrées d'appareils mobiles personnels comprennent:
un dispositif de communication informatisé mobile (240) tel qu'un smartphone ou un bloc-notes ayant un modem de communication interne (204) permettant la communication de données à travers les réseaux cellulaires et l'infrastructure Internet et ayant un écran tactile pour l'interaction de l'utilisateur avec ledit dispositif de communication; et
un dispositif de manchon électronique mobile (250), ledit manchon (250) fonctionnant comme une bio-authentification d'utilisateur privé et une plateforme de mémorisation et de gestion sécurisée des fichiers d'enregistrement de travail liés à l'entreprise physiquement rattachée et interconnectée électroniquement avec ledit dispositif de communication,
**caractérisé par** ledit dispositif de manchon électronique mobile (250) comprenant en outre;
un module de capteur (260) comprenant un ou plusieurs d'une pluralité de capteurs biométriques pour lire au moins un paramètre d'identification biologique personnel de l'utilisateur détenant l'unité d'identification personnelle, ladite unité d'identification personnelle étant identifiée de manière unique avec ledit utilisateur;
un module de traitement (207) en communication avec ledit module capteur (260) pour traiter lesdits paramètres d'identification biologique personnels et pour traiter et gérer les données personnelles et sécurisées et les fichiers de documentation associés auxdites interactions de l'utilisateur avec ladite entreprise de travail ;
une unité d'authentification (224) en communication avec le module de traitement (207) configurée pour recevoir et authentifier l'identité dudit utilisateur en comparant les paramètres d'identification biologique personnels desdits utilisateurs lus par ledit module de capteur (260) et traités par ledit module de traitement (207), avec un ensemble préenregistré de paramètres d'identification biologique personnels associés à l'utilisateur légitime unique mémorisé dans ladite unité d'authentification;
un module de cryptage en communication avec ledit module de traitement (207) pour ledit cryptage plus compression et/ou décompression plus décryptage des fichiers de données de l'utilisateur;
un module de mémoire (216) en communication avec ledit module de traitement et ledit module de cryptage pour le stockage et la gestion des fichiers de données et de documentation liés au travail de l'utilisateur; et
des moyens de communication et de connexion de données (210) en communication avec ledit module de traitement pour connecter lesdites unités de dispositif mobile personnel (240) avec ledit serveur de passerelle de système et avec lesdites ressources informatiques d'entreprise de l'employeur; et
dans lequel ledit au moins un des capteurs biométriques (260) lit et analyse en continu une pluralité de paramètres d'identification biologique personnels avec la personne détenant le dispositif électronique personnel intégré, lesdits paramètres d'identification associés à l'utilisateur enregistré et dans le cas où un changement notable se produit dans un quelconque desdits paramètres d'identification biologique personnels mesurés, l'accès aux fichiers de données de l'entreprise mémorisés dans le manchon (250) est refusé et le fonctionnement dudit dispositif de manchon électronique (250) est complètement arrêté alors que le fonctionnement dudit dispositif de communication mobile (240) reste fonctionnel.
